# EUROPEAN PATENT APPLICATION

(11) **EP 4 779 443 A1**
(43) Date of publication of application: **22.07.2026**
(21) Application number: 26151956.5
(22) Date of filing: 15.01.2026
(51) Int. Cl.: G06F 3/044

(54) **DISPLAY DEVICE AND ELECTRONIC APPARATUS INCLUDING THE SAME**

(30) Priority: 17.01.2025 KR 20250007025
(71) Applicant: Samsung Display Co., Ltd., Yongin-si, Gyeonggi-do 17113 (KR)
(72) Inventor: LEE, Seungchan, Yongin-si, Gyeonggi-Do (KR); YANG, Taehyeon, Yongin-si, Gyeonggi-Do (KR); CHOI, Chung-Won, Yongin-si, Gyeonggi-Do (KR)
(74) Representative: Dr. Weitzel & Partner

(57) **Abstract**

A display device includes: a circuit layer; an element layer on the circuit layer and including a plurality of light emitting elements; an input sensing layer on the element layer, and including a plurality of sensing electrodes; and a sensor controller configured to control driving of the input sensing layer, wherein the circuit layer includes: a plurality of pixel circuits connected to the plurality of light emitting elements, respectively, and repeatedly arranged in a first direction; a plurality of wirings connected to the plurality of pixel circuits and extending in a second direction crossing the first direction; and a loop wiring connected to the sensor controller and having a loop form, wherein the loop wiring and at least one of the plurality of wirings are on a same layer.

## Description

The present invention relates to a display device and an electronic apparatus including the same.

In general, electronic equipment, such as smartphones, digital cameras, laptop computers, navigation systems, or smart televisions, which provide images to users, include an electronic apparatus to display images. The electronic apparatus generates images and provides the generated images to users through a display screen.

The electronic apparatus includes a plurality of pixels to generate images and a plurality of lines connected to the pixels. The pixels receive driving signals through lines and are driven.

The electronic apparatus may include an input sensing layer to provide a touch-based input manner that allows a user to enter information or commands relatively easily, intuitively, and conveniently, in addition to a typical input manner, such as a button, a keyboard, or a mouse.

The above information is only for enhancement of understanding of the background of the invention and therefore the information discussed in this section does not necessarily constitute prior art.

The present invention described herein relates to a display device and an electronic apparatus including the same, and for example, to a display device having an input sensing function and an electronic apparatus including the same.

Aspects of some embodiments of the present invention include a display device having relatively improved input sensing performance and an electronic apparatus including the same.

The invention is defined by the features of the independent claims. The dependent claims and the description provide preferred embodiments.

According to some embodiments of the present invention, a display device includes a circuit layer, an element layer on the circuit layer, and including a plurality of light emitting elements, an input sensing layer on the element layer, and including a plurality of sensing electrodes, and a sensor controller to control driving of the input sensing layer.

According to some embodiments, the circuit layer includes a plurality of pixel circuits connected to the plurality of light emitting elements, respectively, and repeatedly arranged in a first direction, a plurality of wirings connected to the plurality of pixel circuits and extending in a second direction crossing the first direction, and a loop wiring connected to the sensor controller and having a loop form. According to some embodiments, the loop wiring and at least one of the plurality of wirings are on a same layer.

According to some embodiments of the present invention, a display device includes a circuit layer, an element layer on the circuit layer, and including a plurality of light emitting elements, an input sensing layer on the element layer, and including a plurality of sensing electrodes, and a sensor controller to control driving of the input sensing layer.

According to some embodiments, a first light emitting element of the plurality of light emitting elements includes a first electrode, an emission layer, and a second electrode, and the sensor controller is connected to the second electrode, to detect a second noise signal from the second electrode, which means through the second electrode.

According to some embodiments, an electronic apparatus includes a display module and a main controller to control driving of the display module. According to some embodiments, the display module includes a circuit layer, an element layer on the circuit layer, and including a plurality of light emitting elements, an input sensing layer on the element layer, and including a plurality of sensing electrodes, and a sensor controller to control driving of the input sensing layer.

According to some embodiments, the circuit layer includes a driving voltage line connected to the plurality of light emitting elements, and a loop wiring having a loop form. According to some embodiments, the loop wiring and the driving voltage line are on a same layer. According to some embodiments, a first light emitting element of the plurality of light emitting elements includes a first electrode, an emission layer, and a second electrode connected to the driving voltage line. According to some embodiments, the sensor controller is connected to the loop wiring and the second electrode to detect a first noise signal from (that is through) the loop wiring, and to detect a second noise signal from (that is through) the second electrode.

The above and other aspects and features of some embodiments of the present invention will become more apparent by describing in more detail aspects of some embodiments thereof with reference to the accompanying drawings.
FIG. 1 is a perspective view of an electronic apparatus according to some embodiments of the present invention.
FIGS. 2A and 2B are cross-sectional views of electronic apparatuses according to some embodiments of the present invention.
FIGS. 3A and 3B are cross-sectional views of display modules according to some embodiments of the present invention.
FIG. 4 is an expanded cross-sectional view of a display module according to some embodiments of the present invention.
FIG. 5 is an exploded perspective view of a display module according to some embodiments of the present invention.
FIG. 6 is a diagram to describe an operation of an electronic apparatus according to some embodiments of the present invention.
FIG. 7 is a block diagram of a display panel and a panel driver according to some embodiments of the present invention.
FIG. 8 is a block diagram of an input sensor and a sensor controller according to some embodiments of the present invention.
FIG. 9A is a circuit diagram illustrating a pixel according to some embodiments of the present invention.
FIG. 9B is a waveform to describe the operation of a pixel illustrated in FIG. 9A.
FIG. 10 is a plan view illustrating the arrangement of wirings, pixel circuits, and pads according to some embodiments of the present invention.
FIG. 11 is a graph to describe noise signals according to some embodiments of the present invention.
FIG. 12 is a graph to describe a correcting signal according to some embodiments of the present invention.
FIG. 13 is a plan view of a display panel according to some embodiments of the present invention.
FIG. 14 is a flowchart illustrating a method for operating an electronic apparatus according to some embodiments of the present invention.
FIG. 15 is a block diagram of an electronic apparatus according to some embodiments.
FIG. 16 is a schematic view illustrating electronic apparatuses according to various embodiments.

In the specification, the expression that a first component (or region, layer, or part) is "on", "connected to", or "coupled to" a second component refers to that the first component is directly on, connected to, or coupled to the second component or refers to that a third component is interposed therebetween.

The same reference numeral will be assigned to the same component. In addition, in drawings, thicknesses, proportions, and dimensions of components may be exaggerated to describe the technical features effectively. The term "and/or" includes any and all combinations of one or more of associated components

Although the terms "first", or "second" may be used to describe various components, the components should not be construed as being limited by the terms. The terms are only used to distinguish one component, part, region, layer, or portion from another component, part, region, layer, or portion. For example, without departing from the scope of the present invention, a first component, first region, first layer, or first portion may be referred to as a second component, second part, second region, second layer, or second portion, and similarly, the second component, second part, second region, second layer, or second portion may be referred to as the first component, first part, first region, first layer, or first portion. The singular forms are intended to include the plural forms unless the context clearly indicates otherwise.

In addition, the terms "under", "at a lower portion", "above", and "an upper portion" are used to describe the relationship between components illustrated in drawings. The terms are relative and will be described with reference to a direction indicated in the drawing.

It will be further understood that the terms "comprise," "include," or "including," or "have" or "having" specify the presence of stated features, numbers, steps, operations, components, parts, or the combination thereof, but do not preclude the presence or addition of one or more other features, numbers, steps, operations, components, components, and/or the combination thereof.

Unless defined otherwise, all terms (including technical terms and scientific terms) used in the specification have the same meaning as commonly understood by one skilled in the art to which the present invention belongs. Furthermore, terms such as terms defined in the dictionaries commonly used should be interpreted as having a meaning consistent with the meaning in the context of the related technology, and should not be interpreted in ideal or overly formal meanings unless explicitly defined herein.

Hereinafter, aspects of some embodiments of the present invention will be described in more detail with reference to drawings.

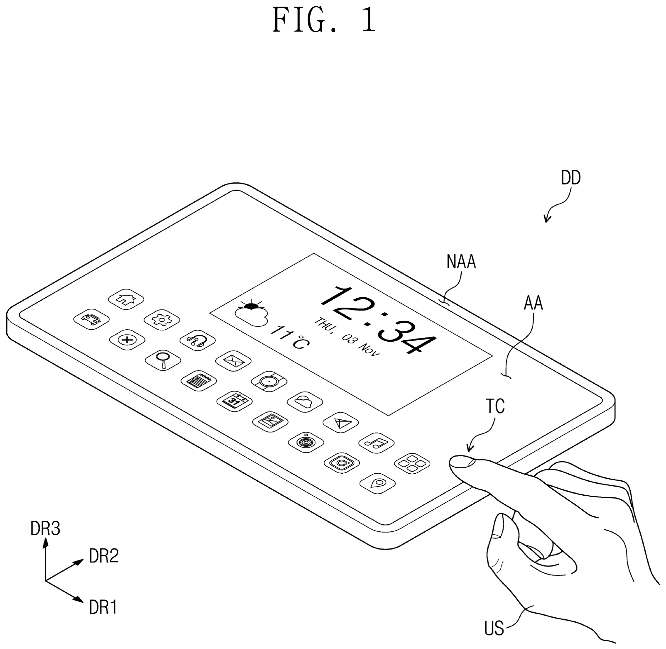

FIG. 1 is a perspective view of an electronic apparatus according to some embodiments of the present invention.

Referring to FIG. 1, an electronic apparatus DD may be a device that is activated in response to an electrical signal. For example, the electronic apparatus DD may be a cellular phone, a foldable phone, a laptop computer, a television, a tablet personal computer (PC), a vehicle navigation system, a game console, or a wearable device, but embodiments according to the present invention are not limited thereto. FIG. 1 illustrates that the electronic apparatus DD is a tablet PC.

The electronic apparatus DD may include an active region AA and a peripheral region NAA defined in the electronic apparatus DD. The electronic apparatus DD may display an image through the active region AA. The active region AA may include a surface defined by a first direction DR1 and a second direction DR2. The peripheral region NAA may surround the active region AA.

A thickness direction of the electronic apparatus DD may be parallel to a third direction DR3 crossing the first direction DR1 and the second direction DR2. Accordingly, a front surface (or top surface) and a rear surface (or bottom surface) of members constituting the electronic apparatus DD may be defined based on the third direction DR3.

Although FIG. 1 illustrates a bar-type electronic apparatus DD, embodiments according to the present invention are not limited thereto. For example, following descriptions may be applied to various electronic apparatuses DD, such as a foldable electronic apparatus, a rollable electronic apparatus, or a slidable electronic apparatus.

The electronic apparatus DD may sense an external input applied from the outside. The external input may include various types of inputs which are provided from the outside of the electronic apparatus DD. The electronic apparatus DD according to some embodiments of the present invention may sense an input (or a user input) TC, which is applied from the outside. The input TC, which is made by a passive-type input unit, may be an input made by a body part of the user, and may include all inputs to make a change in capacitance of the input sensor. The electronic apparatus DD may sense the input TC of the user US applied to a side surface or a rear surface of the electronic apparatus DD depending on a structure of the electronic apparatus DD and embodiments according to the present invention are not limited to one embodiment.

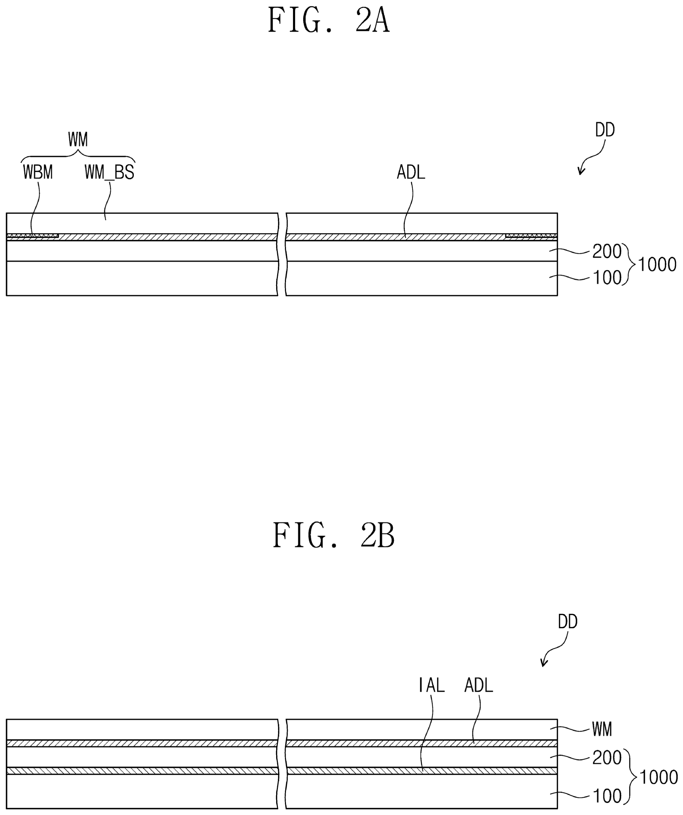

FIGS. 2A and 2B are cross-sectional views of electronic apparatuses according to some embodiments of the present invention.

Referring to FIG. 2A, the electronic apparatus DD may include a display module 1000 (or referred to as a "display device") and a window WM. The display module 1000 generates images and detects an external input. The display module 1000 includes a display panel 100 and an input sensor 200. In this specification, the display panel 100 may be referred to as a "display element layer", and the input sensor 200 may be referred to as a "input sensing layer".

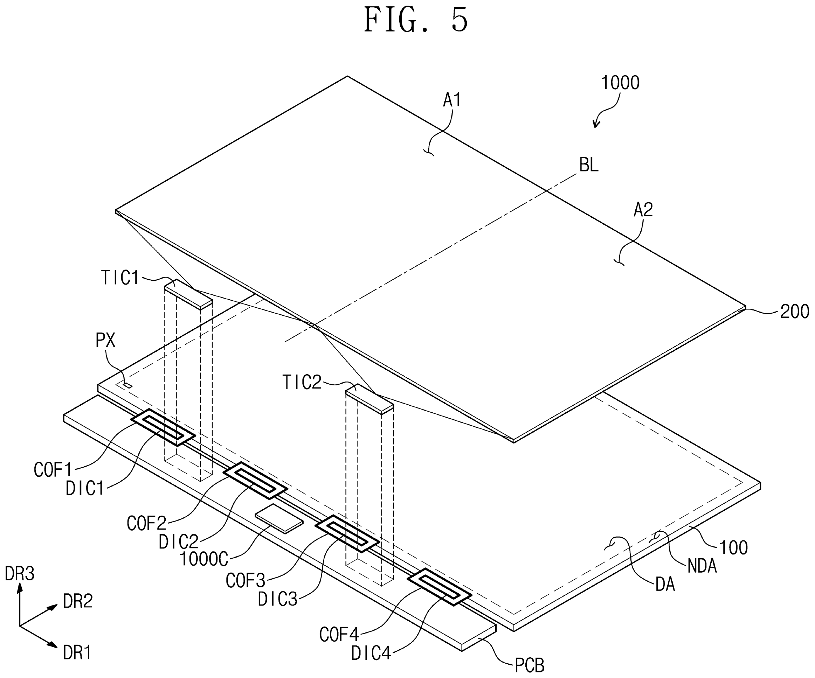

The display panel 100 includes a display region DA (see FIG. 5) corresponding to the active region AA (see FIG. 1) of the electronic apparatus DD and a non-display region NDA (see FIG. 5) corresponding the peripheral region NAA (see FIG. 1) of the electronic apparatus DD.

The display panel 100 is not specifically limited. For example, the display panel 100 may be an emissive-type display panel such as an organic light emitting display panel or an inorganic light emitting display panel.

The input sensor 200 may be located on the display panel 100. According to some embodiments of the present invention, the input sensor 200 may be formed on the display panel 100 through a subsequent process. In other words, when the input sensor 200 is directly located on the display panel 100, an inner adhesive layer IAL is not interposed between the input sensor 200 and the display panel 100. However, as illustrated in FIG. 2B, the inner adhesive layer IAL may be interposed between the input sensor 200 and the display panel 100. In this case, the input sensor 200 and the display panel 100 are not fabricated through the subsequent processes. In other words, after fabricating the input sensor 200 through a process separate from a process for the display panel 100, the input sensor 200 may be fixed on a top surface of the display panel 100 through the internal adhesive layer IAL.

The electronic apparatus DD may further include an optical member located on the display module 1000. The optical member may be an anti-reflective layer to reduce the reflectance of an external light. The optical member may include a polarizer and a phase retarder. The polarizer and the phase retarder may be in a stretch type or coating type. In a coating-type optical film, an optical axis is defined as a stretching direction of a functional film. The coating-type optical film may include liquid-crystal molecules arrayed on a base film.

According to some embodiments of the present invention, the optical member may be omitted. In this case, the display module 1000 may further include a color filter or a black matrix instead of the optical member. The color filter and the black matrix may be directly located on a top surface of the input sensor 200 through subsequent processes. The top surface of the input sensor 200 may be provided through an insulating layer located at the uppermost side of the input sensor 200.

The window WM provides an outer appearance of the electronic apparatus DD. The window WM may include a base substrate, and may further include functional layers such as an anti-reflective layer and an anti-fingerprint layer.

According to some embodiments, the display module 1000 may further include at least one adhesive layer ADL. The adhesive layer ADL may bond components of the display module 1000 to each other. The adhesive layer ADL may be an optically clear adhesive resin layer, or a pressure sensitive adhesive (PSA) layer.

As illustrated in FIG. 2A, the window WM may include a light blocking pattern WBM to define the peripheral region NAA (see FIG. 1). The light blocking pattern WBM may be a colored organic film and may be formed on one surface of a window base layer WM_BS through, for example, a coating manner.

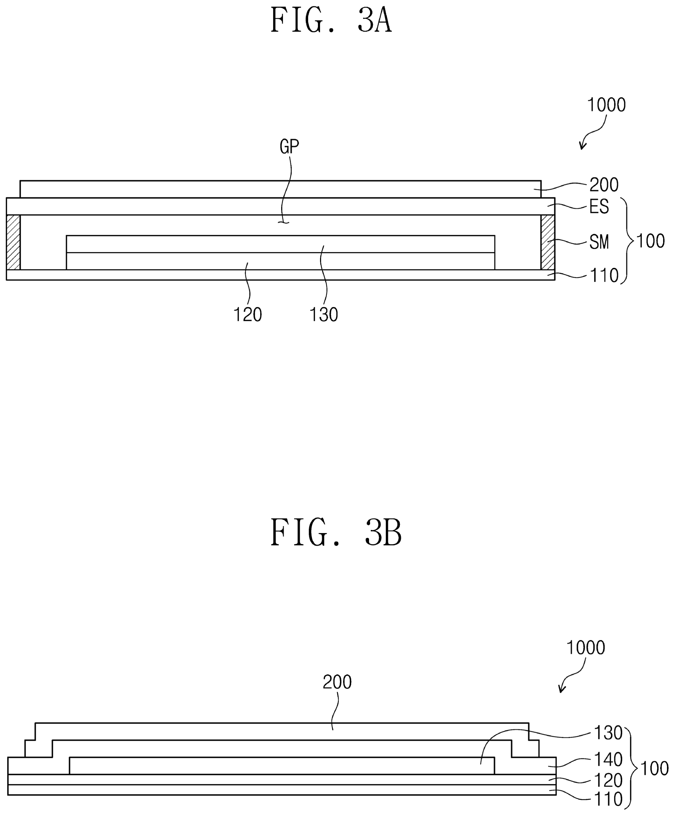

FIGS. 3A and 3B are cross-sectional views of display modules according to some embodiments of the present invention.

Referring to FIG. 3A, the display panel 100 includes a base layer 110, a circuit layer 120 located on the base layer 110, an element layer 130, an encapsulating substrate ES, and a sealant SM to bond the base layer 110 to the encapsulating substrate ES.

The base layer 110 may include at least one plastic film. The base layer 110 may include a plastic substrate, a glass substrate, a metal substrate, or an organic/inorganic composite material substrate. According to some embodiments, the base layer 110 may be a thin film glass substrate having a thickness of several tens to several hundreds of micrometers. The base layer 110 may have a multi-layer structure. For example, the base layer 110 may include an organic layer (for example, a polyimide layer)/at least one inorganic layer/an organic layer (for example, a polyimide layer).

The circuit layer 120 includes at least one insulating layer and a circuit element. The circuit layer 120 is located on the base layer 110. The circuit layer 120 is interposed between the base layer 110 and the element layer 130. Hereinafter, the insulating layer included in the circuit layer 120 is referred to as an intermediate insulating layer. The intermediate insulating layer includes at least one intermediate inorganic film and at least one intermediate organic film. The circuit element may include a pixel driving circuit, which is included in each of a plurality of pixels to display an image, and a sensor driving circuit which is included in each of a plurality of sensors to recognize external information. The external information may be biometric information. According to some embodiments of the present invention, the sensor may include a fingerprint recognizing sensor, a proximity sensor, an iris recognizing sensor, a blood measuring sensor, or an illuminance sensor. In addition, the sensor may be an optical sensor to optically recognize biometrics information. The circuit layer 120 may further include signal lines connected to the pixel driving circuit and/or the sensor driving circuit.

The element layer 130 includes at least one light emitting element. The element layer 130 may further include an organic layer such as a pixel defining film.

The encapsulating substrate ES may be spaced apart from the element layer 130 by a specific gap GP. The base layer 110 and the encapsulating substrate ES may include a plastic substrate, a glass substrate, a metal substrate, or an organic/inorganic composite material substrate. The sealant SM may include an organic adhesive or a frit. The gap GP may be filled with a specific material. An absorbent or a resin material may be filled in the gap GP.

As illustrated in FIG. 3B, the display panel 100 includes the base layer 110, the circuit layer 120 located on the base layer 110, the element layer 130, and an upper protecting layer 140. The upper protecting layer 140 includes a plurality of thin films. The upper protecting layer 140 may include a capping layer to protect the light emitting element. The upper protecting layer 140 may further include a thin film encapsulating layer including at least an inorganic layer/an organic layer/an inorganic layer. The thin film encapsulating layer may be located on the capping layer.

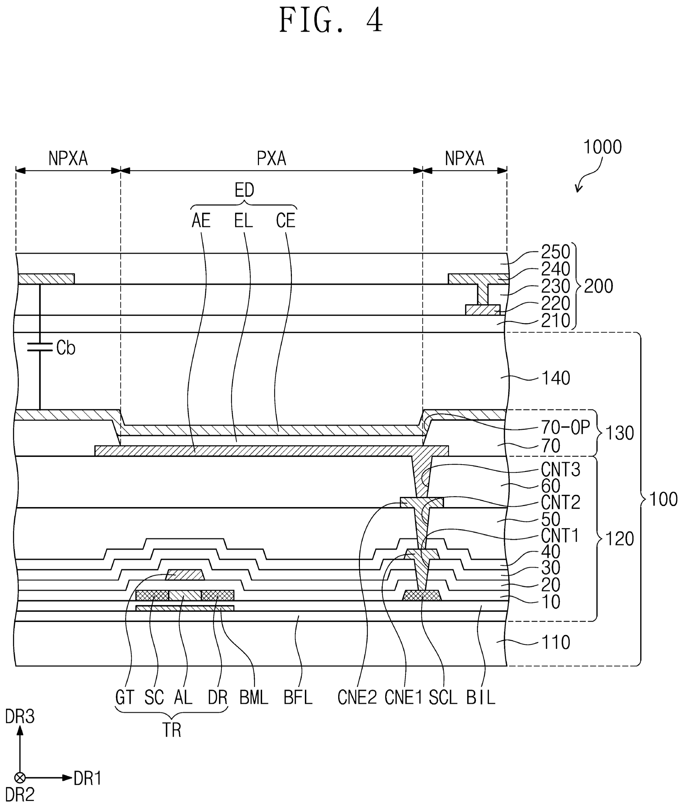

FIG. 4 is an enlarged cross-sectional view of a display module according to some embodiments of the present invention. FIG. 4 is illustrated based on the display module of FIG. 3B.

Referring to FIG. 4, the display module 1000 may include the display panel 100 and the input sensor 200 directly located on the display panel 100. The display panel 100 may include the base layer 110, the circuit layer 120, the element layer 130, and the upper protecting layer 140. The input sensor 200 may be located on the upper protecting layer 140.

The display panel 100 may include the display region DA (see FIG. 5) and the non-display region NDA (see FIG. 5). FIG. 4 illustrates an enlarged partial region of the display region DA.

The base layer 110 may provide a base surface on which the circuit layer 120 is located. The circuit layer 120 may be located on the base layer 110. The circuit layer 120 may include an insulating layer, a semiconductor pattern, a conductive pattern, and a signal line. The insulating layer, a semiconductor layer, and a conductive layer may be formed on the base layer 110 through a coating or deposition process. Thereafter, the insulating layer, the semiconductor layer, and the conductive layer may be selectively patterned through a plurality of photolithography processes. Thereafter, the semiconductor pattern, the conductive pattern, and the signal line included in the circuit layer 120 may be formed.

At least one inorganic layer may be located on a top surface of the base layer 110. According to some embodiments, the display panel 100 includes a buffer layer BFL. The buffer layer BFL may relatively improve bonding force between the base layer 110 and the semiconductor pattern. The buffer layer BFL may include a silicon oxide layer and a silicon nitride layer, and the silicon oxide layer and the silicon nitride layer may be alternately stacked.

The semiconductor pattern may be located on the buffer layer BFL. The semiconductor pattern may include polysilicon. However, embodiments according to the present invention are not limited thereto. For example, the semiconductor pattern may include amorphous silicon or metal oxide.

FIG. 4 merely illustrates a portion of the semiconductor pattern, and the semiconductor pattern may be further located in another region. Semiconductor patterns may be arranged across pixels in a specific rule. The semiconductor pattern may have electrical properties varied depending on a doping state. The semiconductor pattern may include a first region having higher conductivity and a second region having lower conductivity. The first region may be doped with an N-type dopant or a P-type dopant. A P-type transistor includes a doping region doped with P-type dopants. The second region may be a non-doped region or may be doped at a concentration lower than a concentration of the first region.

The first region may have conductivity greater than conductivity of the second region, and may actually serve as an electrode or a signal line. The second region may actually correspond to an active region (or a channel region) of a pixel transistor TR. In other words, a portion of the semiconductor pattern may be the active region of the pixel transistor TR, and another portion of the semiconductor pattern may be a source region or a drain region of the pixel transistor TR.

Each of pixels may have an equivalent circuit including seven transistors, one capacitor, and a light emitting element, and the equivalent circuit of the pixel may be modified in various forms. One pixel transistor TR and one light emitting element ED included in a pixel are illustrated in FIG. 4 by way of example.

A source region SC, a channel region AL, and a drain region DR of the pixel transistor TR may be formed from the semiconductor pattern. The source region SC and the drain region DR may extend in directions opposite to each other from the channel region AL when viewed in a cross-sectional view. FIG. 4 illustrates a portion of a signal transfer region SCL formed as the first region of the semiconductor pattern. According to some embodiments, the signal transfer region SCL may be electrically connected with the pixel transistor TR, when viewed in a plan view.

A first insulating layer 10 may be located on the buffer layer BFL. The first insulating layer 10 may be overlapped with a plurality of pixels in common and may cover the semiconductor pattern. The first insulating layer 10 may be an inorganic layer and/or an organic layer, and may have a single-layer structure or a multi-layer structure. The first insulating layer 10 may include at least one of an aluminum oxide, a titanium oxide, a silicon oxide, a silicon nitride, a silicon oxynitride, a zirconium oxide, or a hafnium oxide. According to some embodiments, the first insulating layer 10 may be a silicon oxide layer in a single layer. An insulating layer of the circuit layer 120, which is to be described below, as well as the first insulating layer 10, may be an inorganic layer and/or an organic layer, and may have a single-layer structure or a multi-layer structure. The inorganic layer may include at least one of the materials described above, but embodiments according to the present invention are not limited thereto.

A gate GT of the pixel transistor TR is located on the first insulating layer 10. The gate GT may be a portion of a metal pattern. The gate GT is overlapped with the channel region AL. The gate GT may function as a mask in the process for doping the semiconductor pattern.

A seventh insulating layer BIL is located under the first insulating layer 10. The seventh insulating layer BIL may be an inorganic layer and/or an organic layer and may have a single-layer structure or multi-layer structure. According to some embodiments, the seventh insulating layer BIL may be a silicon oxide layer in a single layer. The seventh insulating layer BIL may cover a lower electrode BML.

The lower electrode BML may be overlapped with a gate GT of the pixel transistor TR, and may be arranged in the form of an island. The lower electrode BML may form a capacitor together with the gate GT.

A second insulating layer 20 may be located on the first insulating layer 10 to cover the gate GT. The second insulating layer 20 may be commonly overlapped with the pixels. The second insulating layer 20 may be an inorganic layer and/or an organic layer, and may have a single-layer or multi-layer structure. According to some embodiments, the second insulating layer 20 may be a silicon oxide layer in a single layer.

A third insulating layer 30 may be located on the second insulating layer 20. According to some embodiments, the third insulating layer 30 may be a silicon oxide layer in a single layer. A first connection electrode CNE1 may be located on the third insulating layer 30. The first connection electrode CNE1 may be connected to the signal transfer region SCL through a contact hole CNT1 formed through the first, second, and third insulating layers 10, 20, and 30.

A fourth insulating layer 40 may be located on the third insulating layer 30. The fourth insulating layer 40 may be a silicon oxide layer in a single layer. A fifth insulating layer 50 may be located on the fourth insulating layer 40. The fifth insulating layer 50 may be an organic layer. When the fourth insulating layer 40 may be omitted, the fifth insulating layer 50 may be located on the third insulating layer 30.

A second connection electrode CNE2 may be located on the fifth insulating layer 50. The second connection electrode CNE2 may be connected to the first connection electrode CNE1 through a contact hole CNT2 formed through the fourth insulating layer 40 and the fifth insulating layer 50.

A sixth insulating layer 60 may be located on the fifth insulating layer 50 to cover the second connection electrode CNE2. The sixth insulating layer 60 may be an organic layer. The element layer 130 may be located on the circuit layer 120. The element layer 130 may include a light emitting element ED. The light emitting element ED may include a first electrode AE, an emission layer EL, and the second electrode CE. For example, the emission layer EL may include an organic light emitting material, a quantum dot, a quantum rod, a micro-LED, or a nano-LED.

The first electrode AE may be located on the sixth insulating layer 60. The first electrode AE may be connected to the second connection electrode CNE2 through a contact hole CNT3 formed through the sixth insulating layer 60.

A pixel defining film 70 may be located on the sixth insulating layer 60 to cover a portion of the first electrode AE. An opening 70-OP is defined in the pixel defining film 70. The opening 70-OP in the pixel defining film 70 exposes at least a portion of the first electrode AE. According to some embodiments, an emission region PXA is defined to correspond to a partial region of the first electrode AE exposed through the opening 70-OP. A non-emission region NPXA may surround the emission region PXA.

The emission layer EL may be located on the first electrode AE. The emission layer EL may be located in the opening 70-OP. In other words, the emission layer EL may be separately formed in each pixel. When the emission layer EL is separately formed in each pixel, each of the emission layers EL may emit a light in at least one of a blue color, a red color, or a green color. However, embodiments according to the present invention are not limited thereto. For example, the emission layer EL may be provided as a common layer for the plurality of pixels by extending between the pixels. In this case, the emission layer EL may provide a blue light or may provide a white light.

The second electrode CE may be located on the emission layer EL. The second electrode CE may have an integral form, and may be commonly arranged in the plurality of pixels. A common voltage may be provided to the second electrode CE, and the second electrode CE may be referred to as a common electrode.

According to some embodiments, a hole control layer may be interposed between the first electrode AE and the emission layer EL. The hole control layer may be commonly arranged in the emission region PXA and the non-emission region NPXA. The hole control layer may include a hole transport layer and a hole injection layer. An electron control layer may be located between the emission layer EL and the second electrode CE. The electron control layer may include an electron transport layer and an electron injection layer. The hole control layer and the electron control layer may be commonly formed in the pixels by using an open mask.

The input sensor 200 may be directly formed on the top surface of the upper protecting layer 140 through a subsequent process. The input sensor 200 may include a first sensing insulating layer 210, a first sensing conductive layer 220, a second sensing insulating layer 230, a second sensing conductive layer 240, and a third sensing insulating layer 250. In this specification, the first sensing insulating layer 210 may be referred to as a "base insulating layer".

Each of the first sensing conductive layer 220 and the second sensing conductive layer 240 may have a single-layer structure or may include a plurality of patterns stacked in the third direction DR3 and having a multi-layer structure. The conductive layer in the single-layer structure may include a metal layer or a transparent conductive layer. The metal layer may include molybdenum, silver, titanium, copper, aluminum, or the alloy thereof. The transparent conductive layer may include transparent conductive oxide, such as indium tin oxide (ITO), indium zinc oxide (IZO), zinc oxide (ZnO), indium zinc tin oxide (IZTO). In addition, the transparent conductive layer may include conductive polymer such as PEDOT, metal nano-wire, or graphene.

A conductive layer in the multi-layer structure may include metal layers. The metal layers may have, for example, a three-layer structure of titanium/aluminum/titanium. The conductive layer in the multi-layer structure may include at least one metal layer and at least one transparent conductive layer.

The second sensing insulating layer 230 covers the first sensing conductive layer 220, and the third sensing insulating layer 250 covers the second sensing conductive layer 240. Although the first sensing insulating layer 210 to the third sensing insulating layer 250 are illustrated in the single-layer, embodiments according to the present invention are not limited thereto.

Any one of the first sensing insulating layer 210 and the second sensing insulating layer 230 may include an inorganic film. The inorganic film may include at least one of an aluminum oxide, a titanium oxide, a silicon oxide, a silicon nitride, a silicon oxynitride, a zirconium oxide, or a hafnium oxide.

At least one of the second sensing insulating layer 230 or the third sensing insulating layer 250 may include an organic film. The organic film may include at least one of an acrylic resin, a methacrylic resin, a polyisoprene, a vinyl resin, an epoxy resin, a urethane resin, a cellulose resin, a siloxane resin, a polyimide resin, a polyamide resin, or a perylene resin.

FIG. 5 is an exploded perspective view of a display module according to some embodiments of the present invention.

Referring to FIG. 5, the display module 1000 includes the display panel 100 and the input sensor 200.

The display panel 100 includes the display region DA for displaying an image and the non-display region NDA adjacent to the periphery of the display region DA. The display region DA may be a region corresponding to the active region AA illustrated in FIG. 1, and the non-display region NDA may be a region corresponding to the peripheral region NAA illustrated in FIG. 1. The display region DA may be a region for substantially displaying an image, and the non-display region NDA may be a bezel region in which the image is not displayed. Although FIG. 5 illustrates that the non-display region NDA has a structure arranged to surround the display region DA, embodiments according to the present invention are not limited thereto. The non-display region NDA may be located only at one side of the display region DA.

The display panel 100 includes the plurality of pixels PX and signal lines connected to the plurality of pixels PX. Each of the plurality of pixels PX may include a light emitting element. The signal lines may include a data line, scan lines, and power lines.

The display module 1000 may further include a plurality of data driving chips DIC1 to DIC4, a plurality of flexible films COF1 to COF4, and a printed circuit board PCB. The plurality of flexible films COF1 to COF4 may be interposed between the display panel 100 and the printed circuit board PCB to electrically connect the display panel 100 to the printed circuit board PCB. One end portion of each of the plurality of flexible films COF1 to COF4 is coupled to the display panel 100, and an opposite end portion of each of the plurality of flexible films COF1 to COF4 is coupled to the printed circuit board PCB.

Although FIG. 5 illustrates that the data driving chips DIC1 to DIC4 are mounted on the flexible films COF1 to COF4, respectively, embodiments according to the present invention are not limited thereto. In other words, the data driving chips DIC1 to DIC4 may be directly mounted on the display panel 100 through a chip on glass (COG) scheme.

Various circuits for generating various control signals and a power signal necessary for driving the display panel 100 and the data driving chips DIC1 to DIC4 may be provided on the printed circuit board PCB. According to the present invention, for example, a main controller 1000C may be mounted on the printed circuit board PCB to control the overall operation of the electronic apparatus DD (see FIG. 1). For example, the main controller 1000C may include at least one microprocessor, and may be referred to as a "host". The main controller 1000C may further include a graphics controller.

The input sensor 200 may be located on the display panel 100. The input sensor 200 may sense an external input applied from the outside. According to some embodiments of the present invention, the input sensor 200 may overlap the display region DA. The input sensor 200 may include a plurality of sensing regions. Although FIG. 5 illustrates that the input sensor 200 is divided into two sensing regions by a virtual boundary line BL, the number of regions provided to the input sensor 200 is not limited thereto. Hereinafter, the two sensing regions are referred to as a first sensing region A1 and a second sensing region A2. The first sensing region A1 and the second sensing region A2 may be adjacent to each other in the first direction DR1.

The display module 1000 may further include a plurality of sensing controllers (also referred to as sensor controllers) to control the driving of the input sensor 200. According to some embodiments of the present invention, although two sensing controllers (that is, a first sensing controller T1C1 and a second sensing controller T1C2) are illustrated, embodiments according to the present invention are not limited thereto. When the size of the display module 1000 is increased, the number of the sensing controllers TIC1 and TIC2 may be further increased.

The first sensing controller T1C1 may control the driving of the first sensing region A1 of the input sensor 200, and the second sensing controller T1C2 may control the driving of the second sensing region A2 of the input sensor 200. Each of the first sensing controller T1C1 and the second sensing controller T1C2 may be provided in the form of a chip and mounted on the printed circuit board PCB.

The first sensing controller T1C1 and the second sensing controller T1C2 may receive a sensing control signal from the main controller 1000C. The sensing control signal may include a mode determining signal or a clock signal for determining a driving mode (or sensing mode) of the first sensing controller T1C1 and the second sensing controller T1C2. The first sensing controller T1C1 and the second sensing controller T1C2 may provide transmit signals to the input sensor 200, based on the sensing control signal.

The first sensing controller T1C1 and the second sensing controller T1C2 may calculate coordinate information for an input based on signals received from the input sensor 200, and may provide a coordinate signal having the coordinate information to the main controller 1000C. The main controller 1000C executes an operation corresponding to the input, in response to the coordinate signal. For example, the main controller 1000C may operate the display panel 100, based on the coordinate signal such that a new image is displayed on the display panel 100.

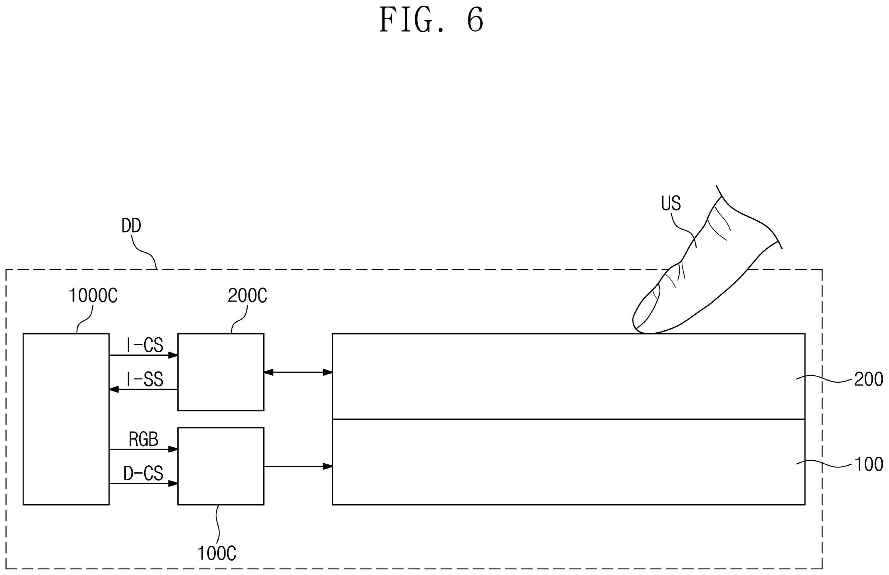

FIG. 6 is a diagram for describing an operation of an electronic apparatus according to some embodiments of the present invention.

Referring to FIG. 6, the electronic apparatus DD may include the display panel 100, the input sensor 200, a panel driver 100C, a sensor controller 200C, and the main controller 1000C.

The input sensor 200 may sense an external input applied from the outside. For example, the input sensor 200 may sense an input by an active-type input unit (for example, an active pen, a stylus pen, or an electronic pen) to transmit or receive a signal, as well as an input by a passive-type input unit such as a body (for example, a finger) of a user.

The main controller 1000C may control an overall operation of the electronic apparatus DD. For example, the main controller 1000C may control operations of the panel driver 100C and the sensor controller 200C. The main controller 1000C may include at least one microprocessor, and may be referred to as a "host". The main controller 1000C may further include a graphics controller.

The panel driver 100C may drive the display panel 100. The panel driver 100C may receive an image signal RGB and a display control signal D-CS from the main controller 1000C. The display control signal D-CS may include various control signals. For example, the display control signal D-CS may include a vertical synchronization signal, a horizontal synchronization signal, a main clock, or a data enable signal. The panel driver 100C may generate a scan control signal and a data control signal for controlling the driving of the display panel 100 based on the display control signal D-CS.

The sensor controller 200C may control the driving of the input sensor 200. The sensor controller 200C may receive a sensing control signal I-CS from the main controller 1000C. The main controller 1000C may provide, to the sensor controller 200C, some signals, such as the vertical synchronization signal and/or the horizontal synchronization signal, which are included in the display control signal D-CS, in addition to the sensing control signal I-CS. Alternatively, the panel driver 100C may provide, to the sensor controller 200C, some signals, such as the vertical synchronization signal and/or the horizontal synchronization signal, which are included in the display control signal D-CS.

The sensor controller 200C may calculate coordinate information of a user input based on a signal received from the input sensor 200 and may provide a coordinate signal I-SS including the coordinate information to the main controller 1000C. The main controller 1000C executes an operation corresponding to the user input based on the coordinate signal I-SS. For example, the main controller 1000C may operate the panel driver 100C such that a new application image is displayed on the display panel 100.

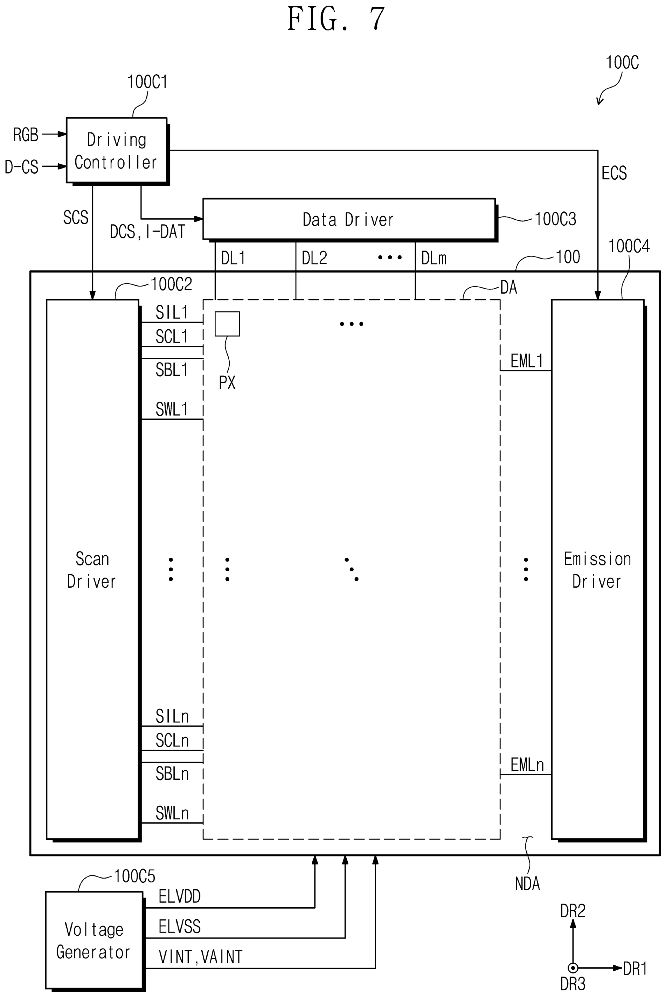

FIG. 7 is a block diagram of a display panel and a panel driver according to some embodiments of the present invention.

Referring to FIG. 7, according to some embodiments of the present invention, the panel driver 100C includes a driving controller 100C1, a scan driver 100C2, a data driver 100C3, an emission driver 100C4, and a voltage generator 100C5.

The driving controller 100C1 receives the image signal RGB and the display control signal D-CS. The driving controller 100C1 generates an image data I-DAT by converting data format of the image signal RGB in compliance with the specification for an interface with the data driver 100C3. The driving controller 100C1 outputs a first control signal SCS, a second control signal ECS, and a third control signal DCS.

The data driver 100C3 receives the third control signal DCS and the image data I-DAT from the driving controller 100C1. The data driver 100C3 converts the image data I-DAT into data signals, and outputs the data signals to a plurality of data lines DL1 to DLm to be described later. The data signals refer to analog voltages corresponding to grayscale values of the image data I-DAT. According to some embodiments of the present invention, the data driver 100C3 may be embedded in at least one of the data driving chips DIC1 to DIC4 illustrated in FIG. 5.

The scan driver 100C2 receives the first control signal SCS from the driving controller 100C1. The scan driver 100C2 may output scan signals to scan lines in response to the first control signal SCS.

The voltage generator 100C5 may generate voltages necessary for operations of the display panel 100. According to some embodiments, the voltage generator 100C5 generates a first driving voltage ELVDD, a second driving voltage ELVSS, a first initializing voltage VINT, and a second initializing voltage VAINT.

The display panel 100 may include the display region DA and the non-display region NDA.

The display panel 100 may include a plurality of pixels PX located in the display region DA. The display panel 100 further includes initializing scan lines SIL1 to SILn, compensating scan lines SCL1 to SCLn, write scan lines SWL1 to SWLn, black scan lines SBL1 to SBLn, emission control lines EML1 to EMLn, and data lines DL1 to DLm. The initializing scan lines SIL1 to SILn, the compensating scan lines SCL1 to SCLn, the write scan lines SWL1 to SWn, the black scan lines SBL1 to SBLn, and the emission control lines EML1 to EMLn extend in the first direction DR1. The initializing scan lines SIL1 to SILn, the compensating scan lines SCL1 to SCLn, the write scan lines SWL1 to SWLn, the black scan lines SBL1 to SBLn, and the emission control lines EML1 to EMLn are arranged to be spaced from each other in the second direction DR2. The data lines DL1 to DLm extend in the second direction DR2, and are arranged to be spaced from each other in the first direction DR1. In this case, "m" and "n" are natural numbers equal to or greater than '1'.

The plurality of pixels PX are electrically connected to the initializing scan lines SIL1 to SILn, the compensating scan lines SCL1 to SCLn, the write scan lines SWL1 to SWLn, the black scan lines SBL1 to SBLn, the emission control lines EML1 to EMLn, and the data lines DL1 to DLm. For example, each of the plurality of pixels PX may be electrically connected to four scan lines. However, the number of scan lines connected to each pixel PX is not limited thereto and may be changed.

The scan driver 100C2 may be located in the non-display region NDA of the display panel 100. The scan driver 100C2 receives the first control signal SCS from the driving controller 100C1. In response to the first control signal SCS, the scan driver 100C2 outputs initializing scan signals to the initializing scan lines SIL1 to SILn and may output compensating scan signals to the compensating scan lines SCL1 to SCLn. In addition, in response to the first control signal SCS, the scan driver 100C2 may output write scan signals to the write scan lines SWL1 to SWLn and may output black scan signals to the black scan lines SBL1 to SBLn. Alternatively, the scan driver 100C2 may include a first scan driver and a second scan driver. The first scan driver may output the initializing scan signals and the compensating scan signals, and the second scan driver may output the write scan signals and the black scan signals.

The emission driver 100C4 may be located in the non-display region NDA of the display panel 100. The emission driver 100C4 receives the second control signal ECS from the driving controller 100C1. The emission driver 100C4 may output the emission control signals to the emission control lines EML1 to EMLn, in response to the second control signal ECS. Alternatively, the scan driver 100C2 may be connected to the emission control lines EML1 to EMLn. In this case, the emission driver 100C4 may be omitted, and the scan driver 100C2 may output the emission control signals to the emission control lines EML1 to EMLn.

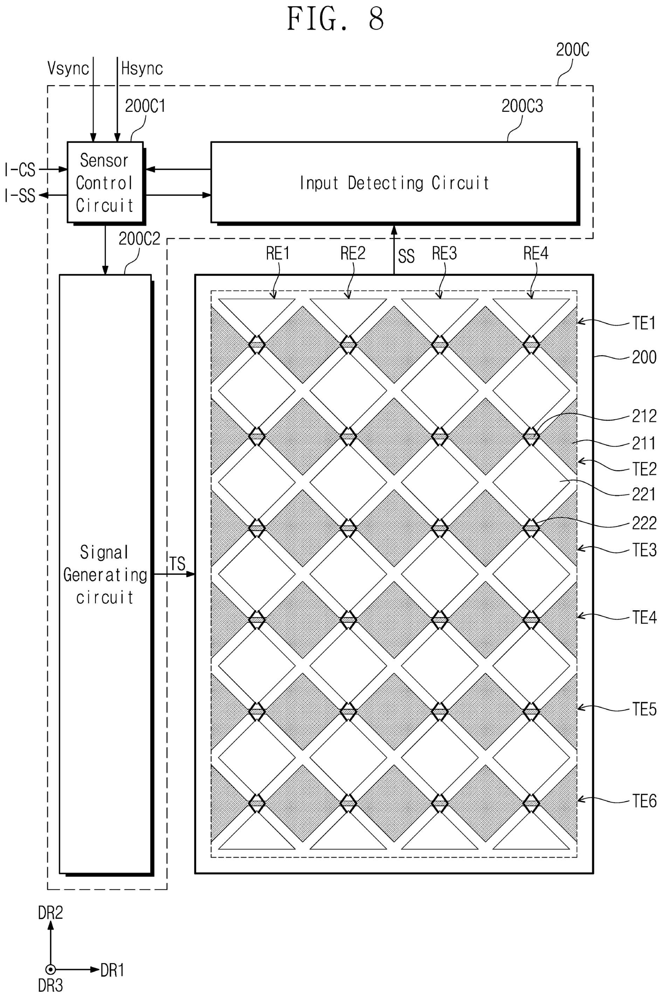

FIG. 8 is a block diagram of an input sensor and a sensor controller according to some embodiments of the present invention.

Referring to FIG. 8, the input sensor 200 may include a plurality of sensing electrodes. The plurality of sensing electrodes may include a plurality of transmit electrodes TE1 to TE6 and a plurality of receive electrodes RE1 to RE4. The plurality of transmit electrodes TE1 to TE6 may extend in the first direction DR1 and may be arranged in the second direction DR2. According to some embodiments of the present invention, the transmit electrodes TE1 to TE6 may extend along the scan lines SIL1 to SILn, SCL1 to SCLn, SWL1 to SWLn, and SBL1 to SBLn (see FIG. 7). The plurality of receive electrodes RE1 to RE4 may extend in the second direction DR2 and may be arranged in the first direction DR1. The plurality of transmit electrodes TE1 to TE6 may cross the plurality of receive electrodes RE1 to RE4. Capacitances may be formed between the plurality of transmit electrodes TE1 to TE6 and the plurality of receive electrodes RE1 to RE4. For convenience of description, six transmit electrodes TE1 to TE6 and four receive electrodes RE1 to RE4 are illustrated in FIG. 8, but the number of transmit electrodes TE1 to TE6 and the number of receive electrodes RE1 to RE4 are not particularly limited thereto.

The input sensor 200 may further include a plurality of first signal wirings connected to the plurality of transmit electrodes TE1 to TE6 and a plurality of second signal wirings connected to the plurality of receive electrodes RE1 to RE4.

Each of the plurality of transmit electrodes TE1 to TE6 may include a first sensing part 211 and a connection part 212. The first sensing part 211 and the connection part 212 may be formed integrally with each other, and located in the same layer.

Each of the plurality of receive electrodes RE1 to RE4 may include a second sensing part 221 and a bridge part 222. Two second sensing parts 221 adjacent to each other may be electrically connected to each other by the bridge part 222. The second sensing part 221 and the bridge part 222 may be located in different layers.

The bridge part 222 may be insulated from the connection part 212 while crossing the connection part 212.

Each of the plurality of transmit electrodes TE1 to TE6 may have a mesh form, and each of the plurality of receive electrodes RE1 to RE4 may have a mesh form.

The sensor controller 200C may receive the sensing control signal I-CS from the main controller 1000C (see FIG. 6) and may provide the coordinate signal I-SS to the main controller 1000C. For example, the sensor controller 200C may be implemented in the form of an integrated circuit (IC) and mounted directly on the input sensor 200 or in a specific region of the display panel 100, or mounted in the form of a chip on film (COF) manner on a separate printed circuit board, such that the sensor controller 200C is electrically connected to the input sensor 200.

The sensor controller 200C may include a sensor control circuit 200C1, a signal generating circuit 200C2, and an input detecting circuit 200C3. The sensor control circuit 200C1 may receive a synchronization signal from the main controller 1000C. The sensor control circuit 200C1 may control operations of the signal generating circuit 200C2 and the input detecting circuit 200C3 based on the sensing control signal I-CS and the synchronization signal. According to some embodiments of the present invention, the synchronization signal may include a vertical synchronization signal Vsync and a horizontal synchronization signal Hsync. Alternatively, the synchronization signal may include only anyone (for example, the horizontal synchronization signal Hsync) of the vertical synchronization signal Vsync and the horizontal synchronization signal Hsync.

The signal generating circuit 200C2 may output transmit signals TS to the transmit electrodes TE1 to TE6 of the input sensor 200. The input detecting circuit 200C3 may receive sensing signals SS from the receive electrodes RE1 to RE4 of the input sensor 200. The input detecting circuit 200C3 may convert an analog signal into a digital signal. For example, the input detecting circuit 200C3 may amplify and filter the sensing signals SS received in an analog form, and may convert the filtered signal into a digital signal.

The sensor control circuit 200C1 may generate the coordinate signal I-SS, based on the digital signal received from the input detecting circuit 200C3. In detail, when the external input (for example, a touch input) made by a finger of a user US (see FIG. 6) is sensed, the sensor control circuit 200C1 may generate the coordinate signal I-SS including information about coordinates, at which the touch input is made, by using the above digital signal.

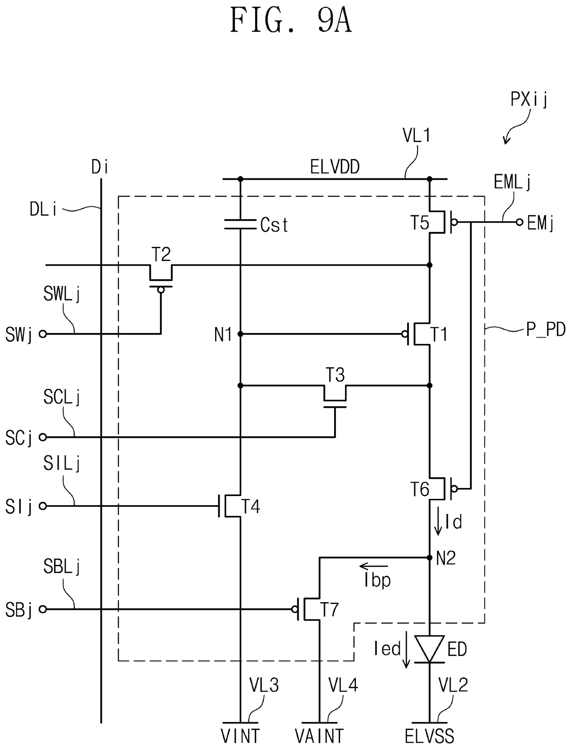

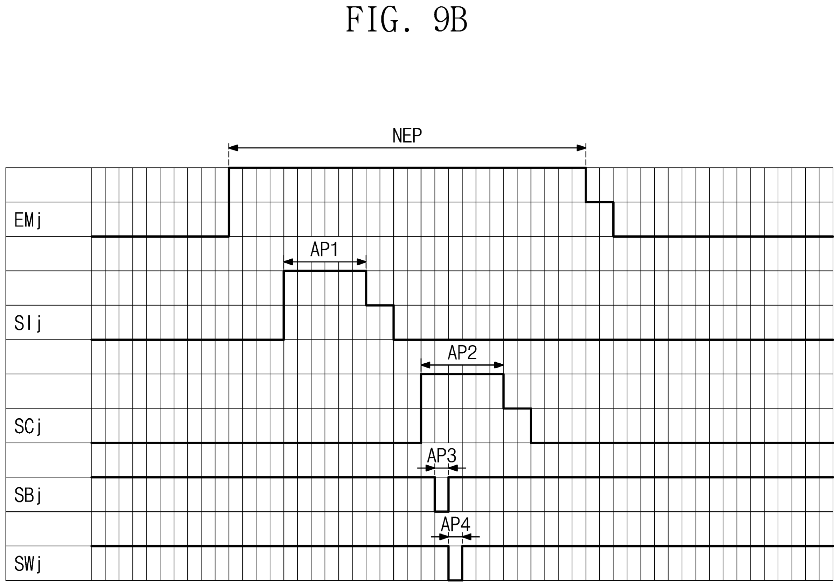

FIG. 9A is a circuit diagram illustrating a pixel according to some embodiments of the present invention, and FIG. 9B is a waveform to describe the operation of a pixel illustrated in FIG. 9A.

FIG. 9A illustrates an equivalent circuit diagram of one pixel PXij of the plurality of pixels PX illustrated in FIG. 7. Because each of the plurality of pixels PX has the same circuit structure, the circuit structure of the pixel PXij will be representatively described and the details of the remaining pixels PX will be omitted in the following description for brevity. Additionally, although FIG. 9A illustrates various components in a pixel according to some embodiments, embodiments according to the present invention are not limited thereto, and according to various embodiments, the pixel may include additional components, or fewer components.

Referring to FIGS. 9A and 9B, the pixel PXij is connected to an i-th data line DLi among the data lines DL1 to DLm (see FIG. 7), a j-th initializing scan line SILj among the initializing scan lines SIL1 to SILn (see FIG. 7), a j-th compensating scan line SCLj among the compensating scan lines SCL1 to SCLn (see FIG. 7), a j-th write scan line SWLj among the write scan lines SWL1 to SWLn (see FIG. 7), a j-th black scan line SBLj among the black scan lines SBL1 to SBLn (see FIG. 7), a j-th emission control line EMLj among emission control lines EML1 to EMLn (see FIG. 7), first and second driving voltage lines VL1 and VL2, and first and second initializing voltage lines VL3 and VL4. In this case, "" is an integer between "1" and "m", and "j" is an integer between "'1" and "n".

The pixel PXij includes the light emitting element ED and a pixel circuit (or a pixel driving circuit) P_PD. The light emitting element ED may be a light emitting diode (that is, an LED). According to some embodiments of the present invention, the light emitting element ED may be an organic light emitting diode including an organic light emitting layer, but embodiments according to the present invention are not limited thereto. The pixel circuit P_PD may control an amount of current flowing through the light emitting element ED, to correspond to a data signal Di. The light emitting element ED may emit a light having a specific luminance to correspond to an amount of current provided from the pixel circuit P_PD.

The pixel circuit P_PD may include first to seventh transistors T1, T2, T3, T4, T5, T6, and T7, and at least one capacitor Cst. A configuration of the pixel circuit P_PD according to some embodiments of the present invention is not limited to the embodiments illustrated in FIG. 9A. The pixel circuit P_PD illustrated in FIG. 9A is provided only for the illustrative purpose. For example, the configuration of the pixel circuit P_PD may be modified and implemented.

At least one of the first to seventh transistors T1, T2, T3, T4, T5, T6, or T7 may be a transistor having a low-temperature polycrystalline silicon (LTPS) semiconductor layer. At least one of the first to seventh transistors T1, T2, T3, T4 T5, T6, or T7 may be a transistor having an oxide semiconductor layer. For example, the third and fourth transistors T3 and T4 may be oxide semiconductor transistors, and the first, second, fifth, sixth, and seventh transistors T1, T2, T5, T6, and T7 may be LTPS transistors.

In detail, the first transistor T1 exerting a direct influence on brightness of the light emitting element ED may be configured to include a semiconductor layer formed of a polycrystalline silicon having higher reliability, and thus, a display device having a high resolution may be implemented. Meanwhile, at least one of the third transistor T3 or the fourth transistor T4 connected to a gate electrode of the first transistor T1 may include an oxide semiconductor to prevent or reduce a leakage current flowing into a gate electrode of the first transistor T1.

Some of the first to seventh transistors T1, T2, T3, T4, T5, T6, and T7 may be P-type transistors, and the remaining transistors may be N-type transistors. For example, the first, second, fifth, sixth, and seventh transistors T1, T2, T5, T6, and T7 are P-type transistors, and the third and fourth transistors T3 and T4 may be N-type transistors. However, embodiments according to the present invention are not limited thereto. For example, all of the first to seventh transistors T1, T2, T3, T4, T5, T6, and T7 may be P-type transistors or N-type transistors. Alternatively, the first, second, fifth, and sixth transistors T1, T2, T5, and T6 are P-type transistors, and the third, fourth, and seventh transistors T3, T4, and T7 may be N-type transistors.

The j-th initializing scan line SILj, the j-th compensating scan line SCLj, the j-th write scan line SWLj, the j-th black scan line SBLj, and the j-th emission control line EMLj may transmit a j-th initializing scan signal Slj, a j-th compensating scan signal SCj, a j-th write scan signal SWj, a j-th black scan signal SBj, and a j-th emission control signal EMj to the pixel PXij, respectively. The i-th data line DLi transmits an i-th data signal Di to the pixel PXij. The i-th data signal Di may have a voltage level corresponding to the image signal RGB (see FIG. 7) input to the driving controller 100C1 (see FIG. 7).

The first and second driving voltage lines VL1 and VL2 may transmit the first driving voltage ELVDD and the second driving voltage ELVSS to the pixel PXij, respectively. In addition, the first and second initializing voltage lines VL3 and VL4 may transmit the first initializing voltage VINT and the second initializing voltage VAINT to the pixel PXij, respectively.

The first transistor T1 is connected between the first driving voltage line VL1 to receive the first driving voltage ELVDD and the light emitting element ED. The first transistor T1 includes a first electrode connected to the first driving voltage line VL1 through the fifth transistor T5, a second electrode connected to a pixel electrode (referred to as an "anode electrode") of the light emitting element ED through the sixth transistor T6, and a third electrode (for example, a gate electrode) connected to a first terminal (for example, a first node N1) of the capacitor Cst. The first transistor T1 may receive the i-th data signal Di received through the i-th data line DLi in response to the switching operation of the second transistor T2 and supply a driving current Id to the light emitting element ED.

The second transistor T2 is connected between the i-th data line DLi and the first electrode of the first transistor T1. The second transistor T2 includes a first electrode connected to the i-th data line DLi, a second electrode connected to the first electrode of the first transistor T1, and a third electrode (for example, a gate electrode) connected to the j-th write scan line SWLj. The second transistor T2 may be turned on in response to the j-th write scan signal SWj received through the j-th write scan line SWLj to transmit the i-th data signal Di received from the i-th data line DLi to the first electrode of the first transistor T1.

The third transistor T3 is connected between the second electrode of the first transistor T1 and the first node N1. The third transistor T3 may include a first electrode connected to the third electrode of the first transistor T1, a second electrode connected to the second electrode of the first transistor T1, and a third electrode (for example, a gate electrode) connected to the j-th compensating scan line SCLj. The third transistor T3 may be turned on in response to the j-th compensating scan signal SCj, which is received through the j-th compensating scan line SCLj, to connect the third electrode of the first transistor T1 to the second electrode of the first transistor T1, such that the first transistor T1 is diode-connected.

The fourth transistor T4 is connected between the first initializing voltage line VL3, which receives the first initializing voltage VINT, and the first node N1. The fourth transistor T4 includes a first electrode connected to the first initializing voltage line VL3 for transmitting the first initializing voltage VINT, a second electrode connected to the first node N1, and a third electrode (for example, a gate electrode) connected to the j-th initializing scan line SILj. The fourth transistor T4 is turned on in response to the j-th initializing scan signal Slj received through the j-th initializing scan line SILj. The fourth transistor T4 turned on transmits the first initializing voltage VINT to the first node N1, such that a potential at the third electrode of the first transistor T1 (that is, a potential of the first node N1) is initialized.

The fifth transistor T5 includes a first electrode connected to the first driving voltage line VL1, a second electrode connected to the first electrode of the first transistor T1, and a third electrode (for example, a gate electrode) connected to the j-th emission control line EMLj. The sixth transistor T6 may include a first electrode connected to the second electrode of the first transistor T1, a second electrode connected to the first electrode (or the anode electrode) of the light emitting element ED, and a third electrode (for example, a gate electrode) connected to the j-th emission control line EMLj.

The fifth and sixth transistors T5 and T6 are simultaneously turned on in response to the j-th emission control signal EMj received through the j-th emission control line EMLj. The first driving voltage ELVDD applied through the turned-on fifth transistor T5 may be transmitted to the light emitting element ED through the sixth transistor T6 after compensated through the diode-connected first transistor T1.

The seventh transistor T7 includes a first electrode connected to the second initializing voltage line VL4 for transmitting the second initializing voltage VAINT, a second electrode connected to the second electrode of the sixth transistor T6, and a third electrode (for example, a gate electrode) connected to the j-th black scan line SBLj. A voltage level of the second initializing voltage VAINT may be different from a voltage level of the first initializing voltage VINT. For example, the second initializing voltage VAINT may have a voltage level lower than a voltage level of the first initializing voltage VINT.

A first terminal of the capacitor Cst is connected to the third electrode of the first transistor T1, and a second terminal, which is opposite to the first terminal, of the capacitor Cst is connected to the first driving voltage line VL1. A second electrode (or a cathode electrode) of the light emitting element ED may be connected to the second driving voltage line VL2 for transmitting the second driving voltage ELVSS. The second driving voltage ELVSS may have a voltage level lower than a voltage level of the first driving voltage ELVDD.

Referring to FIGS. 9A and 9B, the j-th emission control signal EMj has a high level for a non-emission period NEP. For the non-emission period NEP, the j-th initializing scan signal Slj is activated. For an active period AP1 (hereinafter referred to as a "first active period") of the j-th initializing scan signal Slj, when the j-th initializing scan signal Slj having the high level is applied through the j-th initializing scan line SILj, the fourth transistor T4 is turned on in response to the j-th initializing scan signal Slj having the high level. The first initializing voltage VINT is transmitted to the third electrode of the first transistor T1 through the fourth transistor T4 turned on, and the first node N1 is initialized to the first initializing voltage VINT. Accordingly, the first active period AP1 may be defined as an initializing period of the pixel PXij.

Next, when the j-th compensating scan signal SCj is activated, and when the j-th compensating scan signal SCj having the high level is applied through the j-th compensating scan line SCLj, for an active period AP2 (hereinafter referred to as a "second active period") of the j-th compensating scan signal SCj, the third transistor T3 is turned on. The first transistor T1 is diode-connected by the third transistor T3 turned on, to be forward-biased. The first active period AP1 may be in a non-overlap state with the second active period AP2.

The j-th write scan signal SWj is activated within the second active period AP2. For an active period AP4 (hereinafter, referred to as a "fourth active period), the j-th write scan signal SWj has a low level. For the fourth active period AP4, the second transistor T2 is turned on by the j-th write scan signal SWj having the low level. In this case, the third electrode of the first transistor T1 receive a compensating voltage "Di - Vth" which is obtained by reducing the i-th data signal Di, which is applied through the i-th data line DLi, by the threshold voltage Vth of the first transistor T1. In other words, a potential of the third electrode of the first transistor T1 may be the compensating voltage "Di-Vth". The fourth active period AP4 may be overlapped with the second active period AP2. The duration of the second active period AP2 may be longer than the duration of the fourth active period AP4.

The first driving voltage ELVDD and the compensating voltage "Di-Vth" may be applied at opposite terminals of the capacitor Cst, and charges corresponding to the difference in voltage between the opposite terminals may be stored in the capacitor Cst. In this case, a high-level period of the j-th compensating scan signal SCj may be referred to as a "compensation period" of the pixel PXij.

Meanwhile, the j-th black scan signal SBj is activated within the second active period AP2 of the j-th compensating scan signal SCj. The j-th black scan signal SBj has the low level for an active period AP3 (hereinafter, referred to as a "third active period"). For the third active period AP3, the seventh transistor T7 is turned on by receiving the j-th black scan signal SBj, which has the low level, through the j-th black scan line SBLj. A portion of the driving current Id may be discharged through the seventh transistor T7, while serving as a bypass current Ibp by the seventh transistor T7. The third active period AP3 may be overlapped with the second active period AP2. The duration of the second active period AP2 may be longer than the duration of the third active period AP3. The third active period AP3 may precede a fourth active period AP4 and may not be overlapped with the fourth active period AP4.

When the pixel PXij displays a black image, and when the light emitting element ED emits light even if the minimum driving current of the first transistor T1 flows as the driving current Id, it is difficult for the pixel PXij to normally display the black image. Therefore, according to some embodiments of the present invention, the seventh transistor T7 in the pixel PXij may distribute a portion of the minimum driving current of the first transistor T1, which serves as the bypass current Ibp, to a current path other than a current path toward the light emitting element ED. In this case, the minimum driving current of the first transistor T1 may refer to a current through the first transistor T1, under the condition that the first transistor T1 is turned off as the gate-source voltage of the first transistor T1 is less than the threshold voltage Vth. As the minimum driving current (for example, a current of 10 pA or less) flowing to the first transistor T1 is transferred to the light emitting element ED under the condition that the first transistor T1 is turned off, an image of a black grayscale is displayed. When the pixel PXij displays the black image, the influence of the bypass current Ibp is relatively and greatly exerted on the minimum driving current. To the contrary, when an image, such as a normal image or a white image, is displayed, the influence of the bypass current lbp is rarely exerted on the driving current Id. Accordingly, when a black image is displayed, a current (that is, a light emitting current led) reduced by the quantity of the bypass current Ibp, which flows out of the seventh transistor T7, from the driving current Id is provided to the light emitting element ED to firmly express the black image. Accordingly, the pixel PXij may implement an accurate black grayscale image using the seventh transistor T7. Accordingly, the contrast ratio may be relatively improved.

Next, the j-th emission control signal EMj applied from the j-th emission control line EMLj is shifted from the high level to the low level. The fifth and sixth transistors T5 and T6 are turned on by the j-th emission control signal EMj having the low level. In this case, the driving current Id is generated based on a difference between the voltage of the third electrode of the first transistor T1 and the first driving voltage ELVDD. The driving current Id is applied to the light emitting element ED through the sixth transistor T6, such that the current led flows through the light emitting element ED.

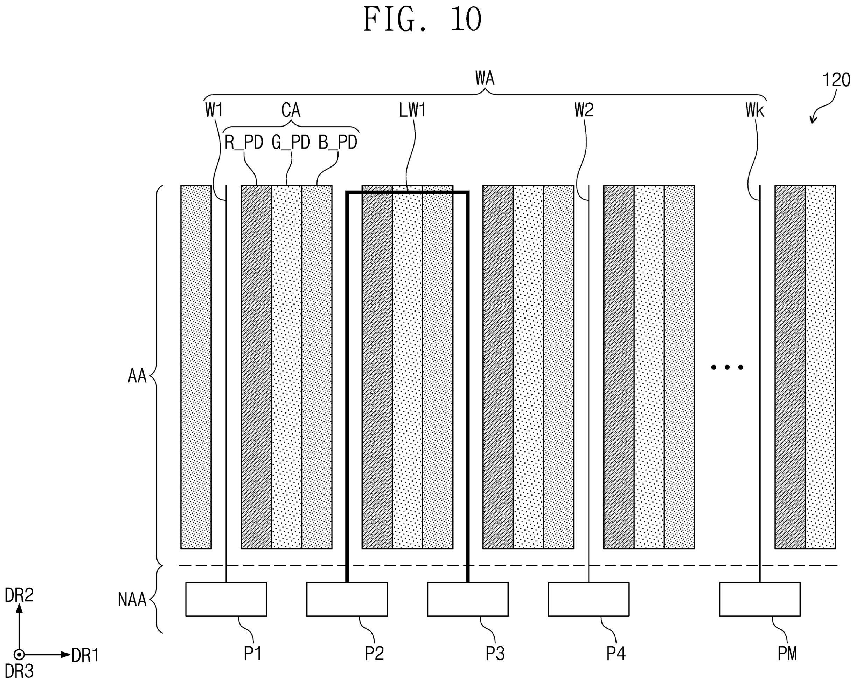

FIG. 10 is a plan view illustrating the arrangement of wirings, pixel circuits, and pads according to some embodiments of the present invention.

Referring to FIG. 10, the circuit layer 120 of the display panel 100 (see FIG. 5) includes a plurality of circuit regions CA, which are repeatedly arranged in the first direction DR1, and a plurality of wiring regions WA which are defined at sides of the plurality of circuit regions CA and include vertical wirings W1 to Wk and a loop wiring LW1. At least one pixel circuit P_PD (see FIG. 9A) may be located in each of the plurality of circuit regions CA.

According to some embodiments of the present invention, three pixel circuits (hereinafter, first to third pixel circuits) R_PD, G_PD, and B_PD sequentially arranged in the first direction DR1 may be located in the circuit regions CA, respectively. The first pixel circuit R_PD is included in the first pixel to output a first color light, the second pixel circuit G_PD is included in the second pixel to output a second color light, and the third pixel circuit B_PD is included in the third pixel to output a third color light.

The plurality of vertical wirings W1 to Wk (or, simply referred to as the plurality of wirings) and the loop wiring LW1 extend the second direction DR2 perpendicular to the first direction DR1 and are located in the wiring regions WA. According to some embodiments of the present invention, the plurality of vertical wirings W1 to Wk may be connected to the pixel circuits. The vertical wirings W1 to Wk may be at least one of the first and second driving voltage lines VL1 and VL2 and the first and second initializing voltage lines VL3 and VL4 of FIG. 9A. In this case, 'k' is an integer equal to or greater than '2'.

At least one of the plurality of vertical wirings W1 to Wk may be utilized as the second driving voltage line VL2 (see FIG. 9). The second driving voltage line VL2 may be connected to an outer voltage line in the non-display region NDA.

The plurality of vertical wirings W1 to Wk may cross horizontal wirings extending in the first direction DR1, although the horizontal wirings are omitted in FIG. 10. The horizontal wirings may make contact with the plurality of vertical wirings W1 to Wk and connected to the pixel circuits (for example, the first to third pixel circuits R_PD, G_PD, and B_PD) located in the plurality of circuit regions CA, respectively.

The vertical wirings W1 to Wk connected to the three pixel circuits R_PD, G_PD, and B_PD are provided on the display panel 100, thereby reducing the difference in luminance between pixels which is made due to the drop of voltages applied to the voltage lines VL1 to VL4. Accordingly, the image quality of the display panel 100 may be relatively improved.

The loop wiring LW1 is additionally provided in the wiring region WA. Although FIG. 10 illustrates only one loop wiring LW1, at least two loop wirings may be provided in the wiring region WA. The loop wiring LW1 and the plurality of vertical wirings W1 to Wk may be provided in the same layer.

The loop wiring LW1 may be provided in a loop form including two vertical wiring parts parallel to the plurality of vertical wiring parts W1 to Wk and a horizontal wiring part to connect the two vertical wirings to each other.

The loop wiring LW1 may be connected to some of the first to M-th pads P1 to PM. The loop wiring LW1 may be connected to the sensor controller 200C (see FIG. 8) through the some of the first to M-th pads P1 to PM. The loop wiring LW1 may be exposed to noise signals generated from the circuit layer 120 (for example, the circuit regions CA and the wiring region WA), and the noise signals may be transmitted to the sensor controller 200C through the loop wiring LW1.

In other words, the sensor controller 200C may detect the noise signals, which are generated from the circuit layer 120, through the loop wiring LW1 (and other loop wirings). The sensor controller 200C may detect the noise signals, which are generated from (or in) the active region AA (particularly, the circuit region CA and the wiring region WA), through the loop wiring LW1 (and other loop wirings), and may perform an operation for removing noise by using the detected noise signals.

According to some embodiments of the present invention, the sensor controller 200C (see FIG. 8) may detect the noise signals, which are generated from (or in) the circuit regions CA and the wiring region WA, from (or through) the loop wiring LW1 (and other loop wirings) by a coupling effect. The sensor controller 200C may detect the noise signals, which are generated from respectively in the circuit regions CA and the wiring region WA, from respectively through the loop wiring LW1 (and other loop wirings) by a coupling effect, when the electronic apparatus DD (see FIG. 1) is driven, and may perform an operation for removing noise by using the detected noise signals.

As described above, the sensor controller 200C detects the noise signals from the circuit regions CA and the wiring region WA, through the loop wirings (for example, the loop wiring LW1) formed using some of the plurality of vertical wirings W1 to Wk. In addition, the sensor controller 200C may perform the operation for removing the noise to minimize the influence by the noise signals, by reflecting the noise signals in the sensing signals SS (see FIG. 8), which are sensed by the input sensor 200 (see FIG. 8).

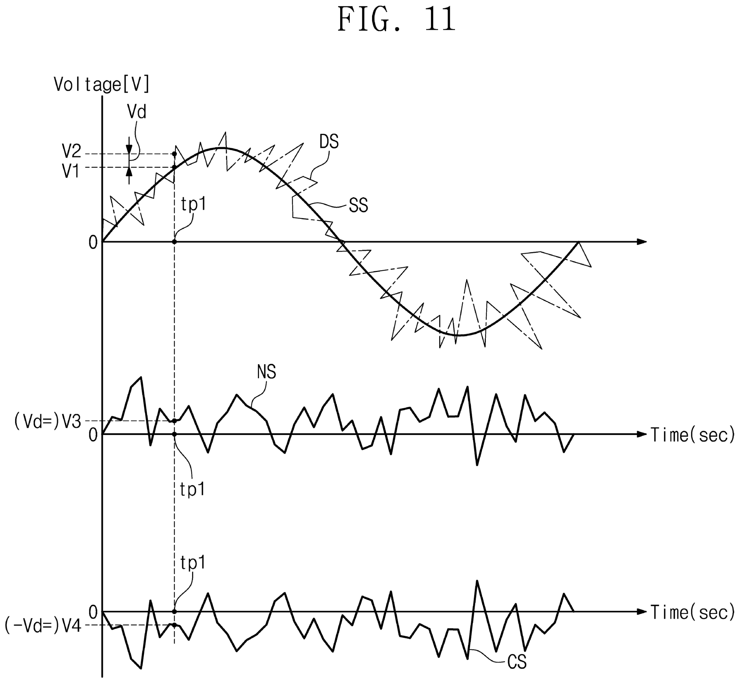

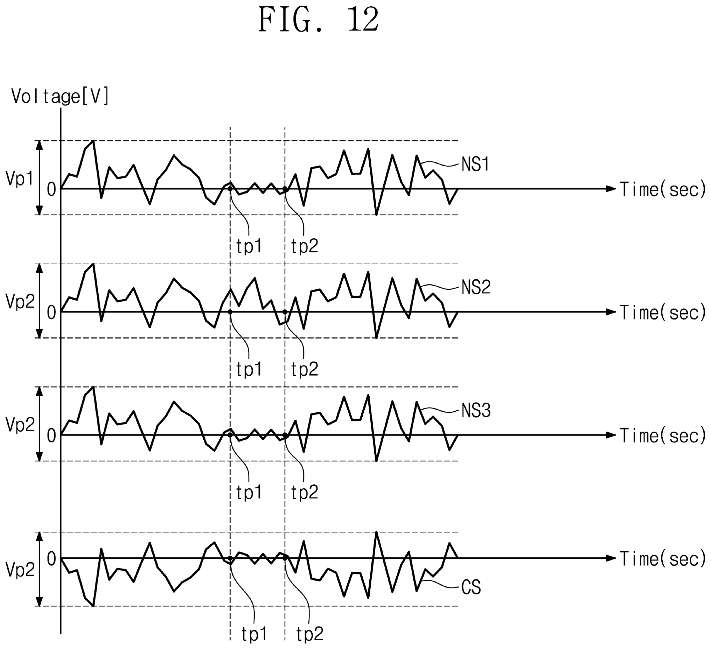

FIG. 11 is a graph to describe noise signals according to some embodiments of the present invention, and FIG. 12 is a graph to describe a correcting signal according to some embodiments of the present invention.

Referring to FIG. 11, although a sensing signal SS (see FIG. 8) without a distortion has a waveform of a sign wave, a distorted sensing signal DS, which is expressed as the sensing signal SS is distorted by noise, has a waveform obtained by synthesizing the waveform of the sensing signal SS with the waveform of the noise signal.

According to some embodiments of the present invention, although the sensing signal SS has a first voltage V1 at a first time point tp1, the distorted sensing signal DS distorted by the noise signal may have a second voltage V2 at the first time point tp1. The second voltage V2 may be greater than the first voltage V1 by a voltage difference Vd. The voltage difference Vd may correspond to the size of the noise signal generated at the first time point tp1.

To prevent or reduce deterioration of the sensing performance due to distortion of the sensing signal SS, which is caused by noise signals generated inside the electronic apparatus DD, the electronic apparatus DD or the sensor controller 200C (see FIG. 8) may detect the noise signals and correct the sensing signal SS based on the detected noise signal. The electronic apparatus DD or the sensor controller 200C may correct the sensing signal SS to perform the operation for removing the noise.

The noise signal NS may be detected from (that is through) the loop wiring LW1 (see FIG. 10) by the sensor controller 200C. For example, the noise signal NS may be detected from (or through) the loop wiring LW1 (see FIG. 10) by the sensor controller 200C, during the operation of the electronic apparatus DD. According to some embodiments of the present invention, the noise signal NS may have a third voltage V3 at the first time point tp1. The third voltage V3 may be the same as the voltage difference Vd.

The electronic apparatus DD or the sensor controller 200C may generate the correcting signal CS by using the noise signal NS (for example, by inverting the noise signal NS). The correcting signal CS may have a waveform obtained by inverting the waveform of the noise signal NS. For example, the correcting signal CS may have a fourth voltage V4 at the first time point tp1. The fourth voltage V4 is a negative voltage of the third voltage V3, and a negative absolute value of the voltage difference Vd.

The sensor controller 200C may detect an external input using a signal which is obtained by adding (or synthesizing) the correcting signal CS to the sensing signal SS. The sensor controller 200C may perform the operation for removing the noise by adding the correcting signal CS, which is generated based on the noise signal NS, to the sensing signal SS.

Referring to FIG. 12, the sensor controller 200C (see FIG. 8) may generate the correcting signal CS based on a first noise signal NS1 and a second noise signal NS2. The sensor controller 200C may detect the first noise signal NS1, which correspond to noise signals generated from the circuit layer 120 (or the circuit region CA and the wiring region WA; see FIG. 10), through the loop wiring LW1. The sensor controller 200C may be connected to one electrode of the light emitting element ED (see FIGS. 4 and 9A) to detect the second noise signal NS2 from (or through) the one electrode of the light emitting element ED (see FIGS. 4 and 9A). According to some embodiments of the present invention, the one electrode of the light emitting element ED may be a cathode electrode to receive the second driving voltage ELVSS (see FIG. 9A).

Because the first noise signal NS1 is detected from respectively through the loop wiring LW1 (see FIG. 10) located in the circuit layer 120, the first noise signal NS1 may exactly indicate the waveform of the noise signals generated from the circuit layer 120. However, because the receive electrodes RE1 to RE4 (refer to FIG. 8) to output the sensing signal SS are arranged at a specific distance from the circuit layer 120, the intensity of the noise signal, which distorts the sensing signal SS, may be less than the intensity of the first noise signal NS1. Meanwhile, the intensity of the noise signal, which distorts the sensing signal SS, may be the same as or similar to the intensity of the second noise signal NS2 detected at the second electrode (that is, the cathode electrode) of the light emitting element ED. Accordingly, the sensor controller 200C (see to FIG. 8) may generate a third noise signal NS3 having a waveform the same as a waveform of the first noise signal NS1 and the intensity the same as the intensity of the second noise signal NS2. The third noise signal NS3 may be similar to the noise signal to distort the sensing signal SS.

According to some embodiments of the present invention, although the third noise signal NS3 may have a waveform the same as a waveform of the first noise signal NS1, but the third noise signal NS3 may have a peak-to-peak voltage intensity the same as a peak-to-peak voltage intensity of the second noise signal NS2. Although the first noise signal NS1 may have a first peak-to-peak voltage intensity Vp1, the second and third noise signals NS2 and NS3 may have a second peak-to-peak voltage intensity Vp2. In other words, the third noise signal NS3 may indicate the intensity of the uppermost noise signals (for example, the second noise signal NS2) of the electronic apparatus DD.

The sensor controller 200C may generate the correcting signal CS by using the third noise signal NS3 (for example, by inverting the third noise signal NS3). The correcting signal CS may have a waveform inverted to the waveform of the third noise signal NS3, and may have the second peak-to-peak voltage intensity Vp2. The sensor controller 200C may perform the operation for removing noise by adding the correcting signal CS to the sensing signal SS (see FIG. 8).

According to some embodiments of the present invention, the sensor controller 200C may detect a plurality of noise signals through a plurality of loop wirings, respectively. The plurality of noise signals detected through the plurality of loop wirings may have mutually different waveforms. The sensor controller 200C may generate the first noise signal NS1 by synthesizing waveforms of the plurality of noise signals detected through the plurality of loop wirings. The first noise signal NS1 may be a sum of waveforms of the plurality of noise signals detected through the plurality of loop wirings or an average of the waveforms of the plurality of noise signals. Accordingly, the first noise signal NS1 may represent waveforms of the noise signals generated from the circuit layer 120 or the circuit region CA and the wiring region WA.

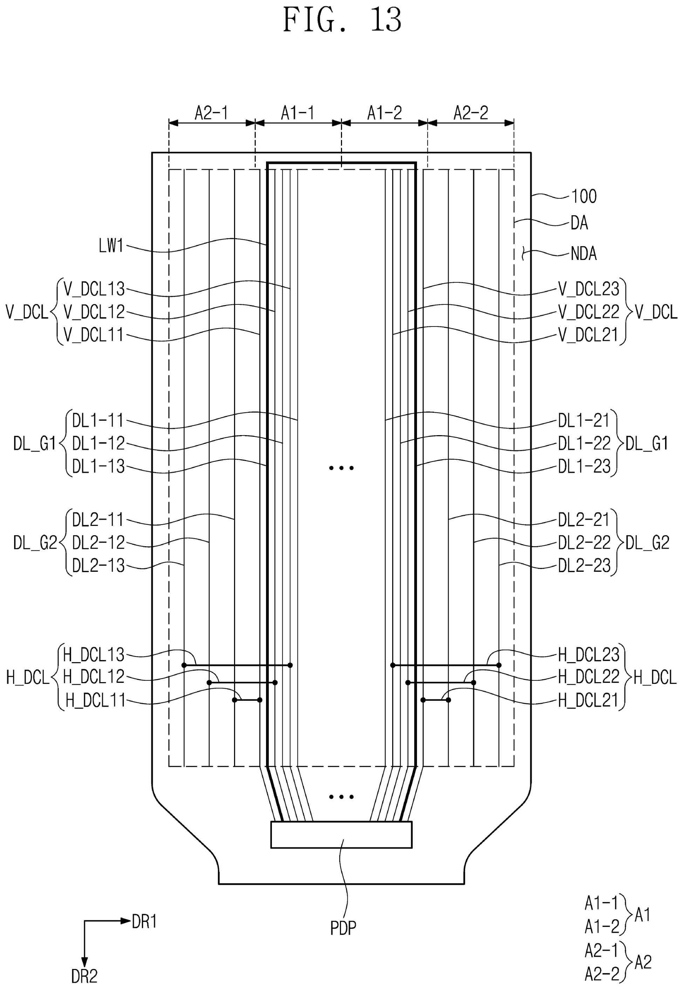

FIG. 13 is a plan view of a display panel according to some embodiments of the present invention. However, the scan lines and the emission control lines will be omitted for the convenience of explanation, and only the data lines are illustrated in FIG. 13.

Referring to FIG. 13, the display panel 100 includes the display region DA and the non-display region NDA. The plurality of pixels PX (see FIG. 7) are located in the display region DA. A pad unit PDP is located in the non-display region NDA or the driving chip is mounted in the non-display region NDA. The pad unit PDP may be connected to the driving controller 100C1 (see FIG. 7), the sensor controller 200C (see FIG. 8), or the main controller 1000C (see FIG. 5).

The data lines DL1 to DLm (see FIG. 7) are connected to the plurality of pixels PX in the display region DA, and connected to the pad unit PDP in the non-display region NDA.

The data lines DL1 to DLm may be grouped into a first group and a second group. The first group includes a plurality of first data lines DL_G1, and the second group includes a plurality of second data lines DL_G2. The plurality of first data lines DL_G1 are arranged in the first direction DR1, and the plurality of second data lines DL_G2 are arranged in the first direction DR1. The plurality of first data lines DL_G1 are spaced apart from the plurality of second data lines DL_G2 in the first direction DR1.

The plurality of first data lines DL_G1 are connected to the pixel circuit P_PD for the first group of pixels of the plurality of pixels PX, and the plurality of second data lines DL_G2 are connected to a pixel circuit P_PD for the second group of pixels of the plurality of pixels PX. The first group of pixels and the first data lines DL_G1 are located in a first region A1, and the second group of pixels and the second data lines DL_G2 are located in a second region A2. The first region A1 includes a (1-1)-th region A1-1 defined at a first side based on a central line of the display panel 100 parallel to the second direction DR2 and a (1-2)-th region defined at a second side based on the central line. The second region A2 includes a (2-1)-th region A2-1, which is interposed between the (1-1)-th region A1-1 and the non-display region NDA, and a (2-2)-th region A2-2 which is interposed between the (1-2)-th region A1-2 and the non-display region NDA.

The plurality of first data lines DL_G1 include (1-1)-th data lines DL1-11 to DL1-13, which are located in the (1-1)-th region A1-1, and (1-2)-th data lines DL1-21 to DL1-23 which are located in the (1-2)-th region A1-2. The plurality of second data lines DL_G2 include (2-1)-th data lines DL2-11 to DL2-13, which are located in the (2-1)-th region A2-1, and (2-2)-th data lines DL2-21 to DL2-23 which are located in the (2-2)-th region A2-2.

The (1-1)-th data lines DL1-11 to DL1-13 and the (1-2)-th data lines DL1-21 to DL1-23 are connected to the pad unit PDP or the driving chip.

The display panel 100 further includes data connection lines to connect the second data lines DL_G2 to the pad unit PDP. The data connection lines include a plurality of vertical connection lines V_DCL extending in the second direction DR2 along the first data lines DL_G1 and a plurality of horizontal connection lines H_DCL extending in the first direction DR1.

The plurality of horizontal connection lines H_DCL include first horizontal connection lines H_DCL11 to H_DCL13 and second horizontal connection lines H_DCL21 to H_DCL23. The first horizontal connection lines H_DCL11 to H_DCL13 are connected to the (2-1)-th data lines DL2-11 to DL2-13, and the second horizontal connection lines H_DCL21 to H_DCL23 are connected to the (2-2)-th data lines DL2-21 to DL2-23. The plurality of vertical connection lines V_DCL include first vertical connection lines V_DCL11 to V_DCL13 and second vertical connection lines V_DCL21 to V_DCL23. The first vertical connection lines V_DCL11 to V_DCL13 are connected to the first horizontal connection lines H_DCL11 to H_DCL13, and the second vertical connection lines V_DCL21 to V_DCL23 are connected to the second horizontal connection lines H_DCL21 to H_DCL23.

Accordingly, the first vertical connection lines V_DCL11 to V_DCL13 are electrically connected to the (2-1)-th data lines DL2-11 to DL2-13 through the first horizontal connection lines H_DCL11 to H_DCL13. The second vertical connection lines V_DCL21 to V_DCL23 are electrically connected to the (2-2)-th data lines DL2-21 to DL2-23 through the second horizontal connection lines H_DCL21 to H_DCL23.

The first vertical connection lines V_DCL11 to V_DCL13 and the (1-1)-th data lines DL1-11 to DL1-13 are alternately and repeatedly arranged in the (1-1)-th region A1-1. The second vertical connection lines V_DCL21 to V_DCL23 and the (1-2)-th data lines DL1-21 to DL1-23 are alternately and repeatedly arranged in the (1-2)-th region A1-2.

Some of the vertical connection lines V_DCL and the plurality of horizontal connection lines H_DCL may be located in the display region DA. In other words, some of data lines to connect the second data lines DL_G2 to the pad unit PDP or the driving chip are located in the display region DA. Accordingly, an area of a region occupied by the data connection lines may be reduced in the non-display region NDA, so the area of the dead space of the display panel 100 may be reduced.

According to some embodiments of the present invention, the display panel 100 may include the loop wiring LW1. The loop wiring LW1 may be provided in a loop form using two vertical wirings and one horizontal wiring. The loop wiring LW1, the (1-1)-th data lines DL1-11 to DL1-13, and the (1-2)-th data lines DL1-21 to DL1-23 may be located on a same layer. The loop wiring LW1 and the plurality of vertical connection lines V_DCL may be on a same layer.

The loop wiring LW1 may be connected to the pad unit PDP. For example, the loop wiring LW1 may be connected to the sensor controller 200C (see FIG. 8) through the pad unit PDP. The loop wiring LW1 may transmit, to the sensor controller 200C, the noise signals generated from the display panel 100 or the circuit layer 120 (see FIG. 4) by the coupling effect. The sensor controller 200C may perform the operation for removing the noise, based on the noise signals detected from, that is through, the loop wiring LW1.

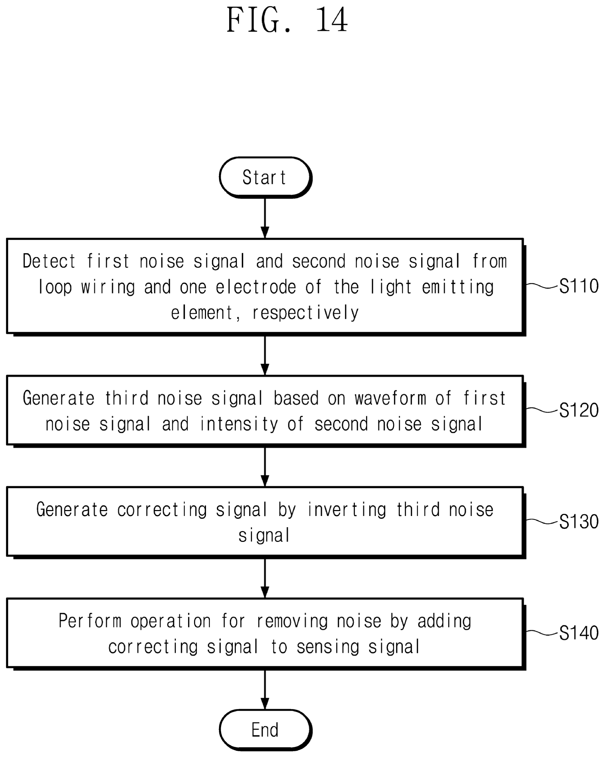

FIG. 14 is a flowchart illustrating aspects of a method for operating an electronic apparatus according to some embodiments of the present invention. Although FIG. 14 illustrates various operations in a method for operating an electronic device, embodiments according to the present invention are not limited thereto, and according to various operations, there may be additional operations, or fewer operations, or the order of operations may vary, unless otherwise stated or implied.

Referring to FIG. 14, the electronic apparatus DD (see FIG. 1) or the sensor controller 200C (see FIG. 8) may perform the operation for removing noise from the sensing signal SS (see FIG. 8).

In S110, the sensor controller 200C may detect the first and second noise signals NS1 and NS2 (see FIG. 12) from (that is through) a wiring loop (for example, the loop wiring LW1 (see FIG. 10) and the one electrode of the light emitting element ED (see FIGS. 4 and 9A), respectively. According to some embodiments of the present disclosure, the loop wiring LW1 may be formed through a process the same as a process for at least one of the plurality of vertical wirings (for example, the driving voltage lines or the initializing voltage lines). According to some embodiments of the present invention, the loop wiring LW1 may be formed by using some of the plurality of vertical wirings (for example, the driving voltage lines or the initializing voltage lines) in the circuit layer 120. The one electrode of the light emitting element ED may be one of an anode electrode to receive the first driving voltage ELVDD and a cathode electrode to receive the second driving voltage ELVSS.

In S120, the sensor controller 200C may generate the third noise signal NS3 (see FIG. 12) based on the waveform of the first noise signal NS1 and the intensity of the second noise signal NS2. The third noise signal NS3 may have the waveform the same as the waveform of the first noise signal NS1, and have the peak-to-peak voltage intensity the same as the peak-to-peak voltage intensity of the second noise signal NS2.

According to some embodiments of the present invention, the sensor controller 200C may adjust the intensity of the second noise signal NS2, depending on the structure of the electronic apparatus DD (for example, the structure of the element layer 130 (see FIG. 4)). For example, the element layer 130 may have various physical sizes according to some embodiments of the electronic apparatus DD. The sensor controller 200C may adjust the intensity of the second noise signal NS2 to be stronger or weaker, depending on the various physical sizes of the element layer 130, and may determine the intensity of the third noise signal NS3 based on the adjusted intensity.

In S130, the sensor controller 200C may generate the correcting signal CS (see FIG. 12) by using the third noise signal NS3 (for example, by inverting the third noise signal NS3). The correcting signal CS may have a waveform the same as a waveform inverted to the waveform of the first noise signal NS1 and may have an intensity the same as the intensity of the second noise signal NS2.

In S140, the sensor controller 200C may perform the operation for removing the noise by adding the correcting signal CS to the sensing signal SS (see FIG. 8).

The electronic apparatus DD according to some embodiments may be applied to various electronic apparatuses. The electronic apparatus according to some embodiments includes a display device described above, and may further include a module or a device having other additional functions.

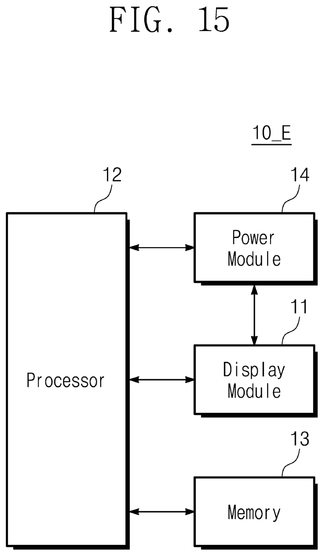

FIG. 15 is a block diagram of the electronic apparatus according to some embodiments of the present invention. Referring to FIG. 15, the electronic apparatus 10_E according to some embodiments of the present invention may include a display module 11, a processor 12, a memory 13, and a power module 14. The display module 11 may correspond to the display module 1000 described above.

The processor 12 may include at least one of a central processing unit (CPU), an application processor (AP), a graphic processing unit (GPU), a communication processor (CP), an image signal processor (ISP), or a controller.

The memory 13 may store data information necessary for the operation of the processor 12 or the display module 11. When the processor 12 runs the application stored in the memory 13, an image data signal and/or an input control signal may be transmitted to the display module 11, and the display module 11 may process the received signal and output the image information through the display screen.

The power module 14 may include a power supply module, such as a power adaptor or a battery device and a power converting module to convert power supplied from the power supply module, into power necessary for the operation of an electronic apparatus 10_E.

At least one of components of the above-described electronic apparatus 10_E may be included in the display device according to some embodiments described above. In addition, some of individual modules functionally included in one module may be included in the display device, and others of the individual modules may be provided separately from the display device. For example, the electronic apparatus may include the display module 11, and the processor 12, the memory 13, and the power module 14 may be provided in the form of another device in the electronic apparatus 10-E instead of the display device.

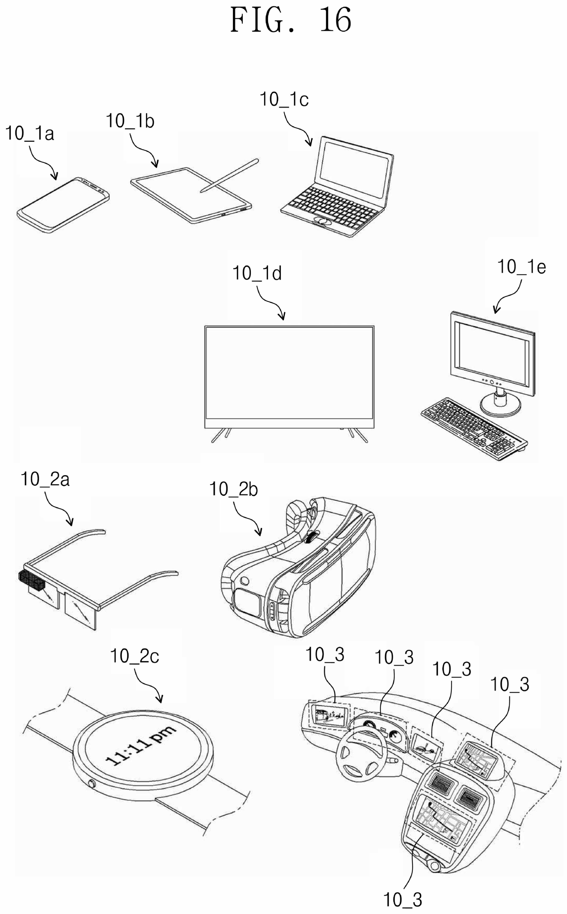

FIG. 16 is a view schematically illustrating electronic apparatuses according to various embodiments.

Referring to FIG 16, various electronic apparatuses employing the display device according to some embodiments may include a wearable electronic apparatus including a display module such as smart glasses 10_2a, a head mounted display 10_2b, and a smart watch 10_2c, and an electronic apparatus 10-3 for the vehicle including the display module such as a center information display (CID), which is located in an instrument panel, a center fascia, and/or a dashboard of a vehicle, or a room mirror display, as well as an electronic apparatus for image display such as a smartphone 10_1a, a tablet PC 10_1b, a laptop computer 10_1c, a television (TV) 10_1d, and a desk monitor 10_1e.

As described above, according to some embodiments of the present invention, the display device may perform the operation for removing the noise, based on noise signals detected from (that is through) the loop wirings located in the circuit layer and the electrodes of the light emitting elements located in the element layer. Therefore, according to the present invention, the noise may be removed without the additional structure to prevent or reduce a dead space of the display device being increased. Accordingly, the whole display quality of the electronic apparatus may be relatively improved.

Although aspects of some embodiments of the present invention have been described for illustrative purposes, those skilled in the art will appreciate that various modifications, and substitutions are possible, without departing from the scope of the accompanying claims.
Accordingly, the technical scope of embodiments according to the present invention are not limited to the detailed description of this specification, but should be defined by the appended claims.

## Claims

1. A display device (1000) comprising:
a circuit layer (120);
an element layer (130) on the circuit layer (120) and including a plurality of light emitting elements (ED);
an input sensing layer (200) on the element layer (130), and including a plurality of sensing electrodes; and
a sensor controller (200C) configured to control driving of the input sensing layer (200),
wherein the circuit layer (120) includes:
a plurality of pixel circuits (P_PD) connected to the plurality of light emitting elements (ED), respectively, and repeatedly arranged in a first direction (DR1);
a plurality of wirings (W1-Wk) connected to the plurality of pixel circuits (P_PD) and extending in a second direction (DR2) crossing the first direction (DR1); and
a loop wiring (LW1) connected to the sensor controller (200C) and having a loop form,
wherein the loop wiring (LW1) and at least one of the plurality of wirings (W1-Wk) are on a same layer.

2. A display device (1000) comprising:
a circuit layer (120);
an element layer (130) on the circuit layer (120) and including a plurality of light emitting elements (ED);
an input sensing layer (200) on the element layer (130), and including a plurality of sensing electrodes; and
a sensor controller (200C) configured to control driving of the input sensing layer (200),
wherein a first light emitting (ED) element of the plurality of light emitting elements (ED) includes a first electrode (AE), an emission layer (EL), and a second electrode (CE), and
wherein the sensor controller (200C) is configured to be connected to the second electrode (CE), to detect a second noise signal (NS2) from the second electrode (CE).

3. The display device (1000) of claim 2, wherein the circuit layer (120) includes:
a plurality of pixel circuits (P_PD) connected to the plurality of light emitting elements (ED), respectively, and repeatedly arranged in a first direction (DR1);
a plurality of wirings (W1-Wk) connected to the plurality of pixel circuits (P_PD) and extending in a second direction (DR2) perpendicular to the first direction (DR1); and
a loop wiring (LW1) connected to the sensor controller (200C), and having a loop form,
wherein the loop wiring (LW1) and at least one of the plurality of wirings (W1-Wk) are on a same layer.

4. The display device (1000) of claim 2 or 3, wherein the sensor controller (200C) is further configured to:
generate a correcting signal (CS) by using the second noise signal (NS2); and
perform an operation for removing noise by applying the correcting signal (CS) to sensing signals (SS) obtained through the plurality of sensing electrodes.

5. The display device (1000) of at least one of claims 1, 3 or 4, wherein the sensor controller (200C) is configured to:
detect a first noise signal (NS1) from the loop wiring (LW1).

6. The display device (1000) of claim 5, wherein the sensor controller (200C) is further configured to:
generate a correcting signal (CS) by using the first noise signal (NS1); and
perform an operation for removing noise by applying the correcting signal (CS) to sensing signals (SS) obtained through the plurality of sensing electrodes.

7. The display device (1000) of claims 1 and 5 or 6, when not dependent on claim 2, wherein a first light emitting element (ED) of the plurality of light emitting elements (ED) includes:
a first electrode (AE) configured to receive a first driving voltage (ELVDD);
an emission layer (EL); and
a second electrode (CE) configured to receive a second driving voltage (ELVSS),
wherein the second driving voltage (ELVSS) is lower than the first driving voltage (ELVDD), and
wherein the sensor controller (200C) is further configured to be connected to the loop wiring (LW1) and the second electrode (CE) and configured to detect the first noise signal (NS1) and a second noise signal (NS2) from the loop wiring (LW1) and the second electrode (CE), respectively.

8. The display device (1000) of claim 7, or of claims 2 and 5 and optionally claim 6, wherein the sensor controller (200C) is further configured to:
generate a third noise signal (NS3) based on a waveform of the first noise signal (NS1) and an intensity of the second noise signal (NS2);
generate a correcting signal (CS) by using the third noise signal (NS3); and
perform an operation for removing noise by applying the correcting signal (CS) to sensing signals (SS) obtained through the plurality of sensing electrodes.

9. The display device (1000) of claim 8, wherein the third noise signal (NS3) has a waveform the same as the waveform of the first noise signal (NS1), and has an intensity the

10. The display device (1000) of claim 1 or 3 and optionally at least one of claims 4 to 9, wherein the plurality of wirings (W1-Wk) include:
a first driving voltage line (VL1) configured to supply a first driving voltage (ELVDD) to each of the plurality of pixel circuits (P_PD); and
a second driving voltage line (VL2) configured to supply a second driving voltage (ELVSS) to each of the plurality of pixel circuits (P_PD), and
wherein the loop wiring (LW1) and the second driving voltage line (VL2) are on a same layer.

11. The display device (1000) of at least one of claims 1 to 10, wherein the plurality of wirings (W1-Wk) include:
a first initializing voltage line (VL3) configured to supply a first initializing voltage (VINT) to each of the plurality of pixel circuits (P_PD); and
a second initializing voltage line (VL4) configured to supply a second initializing voltage (VAINT) to each of the plurality of pixel circuits (P_PD), and
wherein the loop wiring (LW1) and the first initializing voltage line (VL3) are on a same layer, or
the loop wiring (LW1) and the second initializing voltage line (VL4) are on a same layer.

12. The display device (1000) of claims 1 or 3 and optionally at least one of claims 4 to 11, wherein a display region (DA) and a non-display region (NDA) is defined in the circuit layer (120),
wherein the circuit layer (120) further includes:
a plurality of data lines (DL1-DLm) connected to the light emitting elements (ED);
a vertical connection line (V_DCL) spaced apart from the plurality of data lines (DL1-DLm) in the first direction (DR1) and extending in the second direction (DR2); and
a horizontal connection line (A_DCL) connecting some of the data lines (DL1-DLm) and extending in the first direction (DR1), and
wherein the loop wiring (LW1) and the vertical connection line (V_DCL) are on a same layer.

13. The display device (1000) of claim 1 or 3 and optionally at least one of claims 4 to 12, wherein the loop wiring (LW1) is formed through a same process as at least one of the wirings (W1-Wk).

14. An electronic apparatus (DD) comprising:
the display device of one of claim 2 and optionally at least one of claims 3 to 6 and 8 to 13; and
a main controller (100C) configured to control driving of the display module,
wherein the circuit layer (120) includes:
a driving voltage line (VL2) connected to the plurality of light emitting elements (ED); and
a loop wiring (LW1) provided in a loop form,
wherein the loop wiring (LW1) and the driving voltage line (VL2) are on a same layer,
wherein the second electrode (CE) is connected to the driving voltage line (VL2), and
wherein the sensor controller (200C) is further configured to be connected to the loop wiring (LW1) to detect a first noise signal (NS1) from the loop wiring (LW1).

15. The electronic apparatus (DD) of claim 14, wherein the plurality of sensing electrodes include:
a plurality of transmit electrodes (TE1-TE6) and a plurality of receive electrodes (RE1-RE4).
